(19) Europäisches Patentamt
European Patent Office
Office européen des brevets

(11) Publication number: **0 112 718 B1**

(12) **EUROPEAN PATENT SPECIFICATION**

(45) Date of publication of patent specification: **18.03.87**

(51) Int. Cl.[4]: **C 08 G 63/68,** B 32 B 27/36, C 09 J 3/16

(21) Application number: **83307807.4**

(22) Date of filing: **21.12.83**

(54) **Novel polyester, adhesives comprising it, and laminates made of it.**

(30) Priority: **21.12.82 JP 225426/82**
**26.01.83 JP 11924/83**

(43) Date of publication of application:
**04.07.84 Bulletin 84/27**

(45) Publication of the grant of the patent:
**18.03.87 Bulletin 87/12**

(84) Designated Contracting States:
**AT BE CH DE FR GB IT LI NL SE**

(56) References cited:
**DE-A-943 380**
**FR-A-1 079 323**
**FR-A-1 426 192**

(73) Proprietor: **KURARAY CO., LTD.**
**1621 Sakazu**
**Kurashiki-City Okayama Prefecture (JP)**

(72) Inventor: **Murata, Yoshifumi**
**1660 Sakazu**
**Kurashiki-City (JP)**
Inventor: **Igi, Keishiro**
**139-1 Yasue**
**Kurashiki-City (JP)**
Inventor: **Narukawa, Hiroshi**
**1433-10 Misu**
**Sojya-City (JP)**
Inventor: **Uetsuki, Masao**
**2545-5 Sakazu**
**Kurashiki-City (JP)**
Inventor: **Bando, Satoshi**
**1660 Sakazu**
**Kurashiki-City (JP)**
Inventor: **Kawai, Shuji**
**1652-1 Sakazu**
**Kurashiki-City (JP)**
Inventor: **Shirano, Kenji**
**1660 Sakazu**
**Kurashiki-City (JP)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 112 718 B1**

Courier Press, Leamington Spa, England.

## Description

This invention relates to polyester adhesives and laminates and laminated hollow vessels comprising such polyester adhesives as a constituent element.

Polyesters, typically polyethylene terephthalate, are currently enjoying an increasing demand in the manufacture, not only of fibres and of films, but also of containers for food and drink and of food packaging films, owing *inter alia* to their favourable mechanical properties, transparency, heat resistance and electrical characteristics. Since such polyester containers and films function to a certain extent as gas barriers, they can be used for the preservation of such materials as food and drink. However, for certain kinds of food and drink, further improvement in gas barrier function is required. Attempts have been made to provide laminated containers and films using a polyester and another resin having a superior gas-barrier function to polyester, especially copolymers of ethylene & vinyl alcohol (EVA). Thus, for instance, Japanese Kokai Tokkyo Koho (first published application) Nos. JP—A—56-77,144 and JP—A—57-128,516 disclose laminated hollow vessels made of a polyester and an EVA copolymer. These hollow vessels, however, show a marked tendency to interlayer separation because the adhesion between the polyester and the EVA copolymer is poor and no adhesive is used there for uniting both the polymer layers with each other. Japanese Kokai Tokkyo Koho No. JP—A—53-108,162 discloses a laminated hollow vessel composed of a polyester layer and an EVA copolymer layer united with each other with an adhesive blend of the materials of both the layers, namely the polyester and the EVA copolymer, and Japanese Kokai Tokkyo Koho No. JP—A—56-117,653 discloses a laminated hollow vessel made of a polyester and an ordinary EVA copolymer united together by means of an EVA copolymer of high ethylene content. However, such adhesives are still insufficient to provide good interlayer adhesion and accordingly the hollow vessels produced by using them are not suitable in practice. In particular, the low adhesive strength between the adhesive layer and the polyester layer has been a problem.

Accordingly, development of an adhesive capable of firmly uniting a polyester layer with an EVA copolymer layer or of an improved polyester for use as a base capable of adhering to a carboxyl-containing polyolefin adhesive that is known to adhere well to an EVA copolymer has been strongly demanded, so that laminated articles can be produced from a polyester and an EVA copolymer.

The present invention provides a thermoplastic polyester comprising constituent residues represented by the following formulas (I), (II), (III) and (IV):

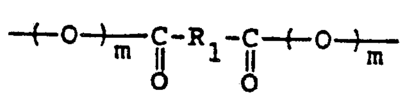 (I)

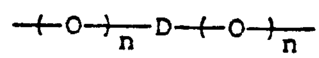 (II)

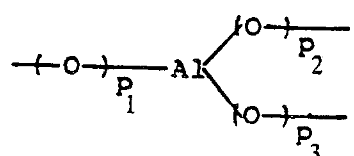 (III)

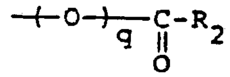 (IV)

where $R_1$, in its repeated occurrence in the polyester, represents one or more bivalent groups each derived by removal of both carboxyl groups from terephthalic acid, isophthalic acid, orthophthalic acid or a straight-chained $C_{4-10}$ aliphatic dicarboxylic acid; $R_2$, in its repeated occurrence in the polyester, represents one or more univalent groups derived by removal of the carboxyl group from a $C_{6-30}$ aliphatic or alicyclic monocarboxylic acid or $C_{7-20}$ aromatic monocarboxylic acid; D, in its repeated occurrence in the polyester, represents one or more bivalent groups each derived by removal of both hydroxyl groups from a $C_{2-10}$ aliphatic diol or a $C_{6-8}$ alicyclic diol; and each of $m$, $n$, $p_1$, $p_2$, $p_3$ and $q$ is 0 or 1, the constituent residues being bonded together in the combinations (I)—(II), (I)—(III), (II)—(III), (II)—(IV), (III)—(III) and (III)—(IV) and via only one oxygen atom in each combination, the molar ratio (I):(II) being substantially 1:1, the molar ratio (I):(III) being in the range 1,000:1 to 100:5 and the molar ratio (III):(IV) being in the range 4:1 to 1:10, the polyester having an intrinsic viscosity of not less than 0.5 dl/g.

The thermoplastic polyester according to the present invention is composed mainly of polyester chains with alternating constituent residues (I) and (II). Such chains are branched by sporadic insertion of the constituent residue (III). The constituent residue (IV) controls the chain length and the extent of branching by its binding to (II) and (III).

The invention also provides a thermoplastic polyester which comprises, in addition to the above constituent residues, minor amounts of polyfunctional organic residues (V)—(VIII):—

$$R_3 \left[ (O)_{r_1} \right]_{s_1}$$ (V)

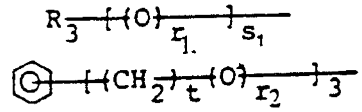 (VI)

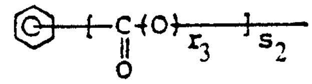 (VII)

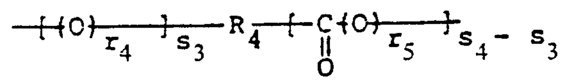 (VIII)

where each of $s_1$, $s_2$ and $s_4$ is 3 or 4, $s_3$ is an integer of from 1 to $s_4$—1, $R_3$ is an aliphatic organic residue containing 3 to 9 carbon atoms and having a valency of $s_1$, $R_4$ is an aliphatic organic residue containing 2 to 4 carbon atoms and having a valency of $s_4$, the valency of the benzene nucleus in (VI) is 3, the valency of the benzene nucleus in (VII) is $s_2$, $t$ is 1, 2, 3 or 4, each of $r_1$, $r_2$, $r_3$, $r_4$ and $r_5$ is 0 or 1, each free valency of the constituent units (V) and (VI) being bonded to a (I), (III), (IV), (VII) or (VIII) unit, each free valency of the constituent unit (VII) being bonded to a (II), (III), (V), (VI) or (VIII) unit and each free valency of the constituent unit (VIII) being bonded to any other of units (I) to (VIII), each bonding between two constituent units being made via only one oxygen atom, the molar ratio (I):(V) + (VI) + (VII) + (VIII) being in the range 100:0 to 100:1 and the content of (IV) being the sum of a content corresponding to the molar ratio of (III):(IV), which is 4:1 to 1:10, and a content corresponding to a molar ratio of (IV):(V) + (VI) + (VII) + (VIII) in the range of 0:1 to 15:1, the polyester having an intrinsic viscosity of not less than 0.7 dl/g. In that case, the polyester may contain an additional amount (hence, in total, a larger amount) of (III) as necessary.

The main constituent units of the polyester according to the invention are (I) and (II). The repeatedly occurring units represented by formula (I) may be the same or different in one and the same polyester molecule and each such unit is derived from a phthalic acid or a straight-chained $C_{4-10}$ aliphatic dicarboxylic acid such as succinic acid, adipic acid, azelaic acid or sebacic acid. The repeating units represented by formula (II) may also be the same or different and each unit is derived from a $C_{2-10}$ aliphatic diol such as ethylene glycol, trimethylene glycol, 1,4-butanediol, penta-methylene glycol, 1,6-hexanediol, 3-methyl-1,5-pentanediol, 1,8-octanediol, 1,10-decanediol, diethylene glycol or triethylene glycol, or a $C_{6-8}$ alicyclic diol such as cyclohexanediol or cyclohexane-dimethanol. It is necessary that the principal constituent units (I) and (II) should be present in the polyester of the invention substantially in the molar ratio of 1:1 so that both the units can form a polyester chain comprising a repeating unit represented by the formula

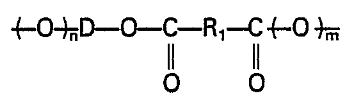

in which both the units are united together by an ester bond. Since such a polyester chain is an essential element of the polyester of the present invention, the chain is important in providing the polyester with the same excellent physical properties (e.g. mechanical strength) as those of conventional polyesters. By adequate selection of the dicarboxylic acid unit (I) and the diol unit (II), it is possible to provide the polyester of the invention with those physical properties which are desired for a certain specific purpose or use. In using the polyester of the invention as an adhesive, as mentioned later, the glass transition temperature of the polyester according to the invention is preferably not higher than 30°C. Such polyesters can be obtained, for example, by increasing the content of aliphatic dicarboxylic acid in unit (I) and/or the content diols containing 4 or more atoms in unit (II).

For use as a base for laminated articles, the polyester according to the invention preferably has a glass transition temperature higher than 30°C and/or a melting point of not lower than 120°C. Such polyesters may preferably have not less than 70 mole percent terephthalic and isophthalic acid units in residue (I) and not less than 70 mole percent of ethylene glycol or 1,4-butanediol units, with the remaining 0—30 mole percent of units derived from ethylene glycol (when the main constituent diol is other than ethylene glycol), 1,4-butanediol (when the main constituent diol is other than 1,4-butanediol), 1,4-butanediol), 1,4-cyclohexanedimethanol or diethylene glycol in residue (II).

The aluminium in residue (III) is tervalent. Of the three valencies, at least one is bound to the dicarboxylic acid residue (I) or diol residue (II) through an oxygen atom to form a carboxylate salt bonding of the formula

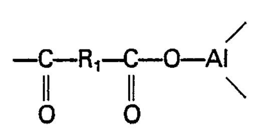

or an alkoxide bonding of the formula

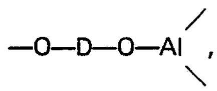

respectively. Furthermore, as is mentioned below, it is supposed that some aluminium atoms present in the polyester are bonded to the dicarboxylic acid residue (I) or diol residue (II) via an alumina bonding such as

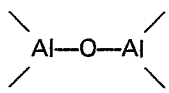

or

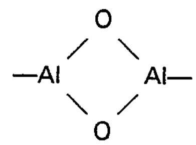

to form a bonding such as

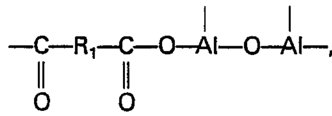

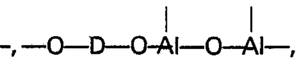

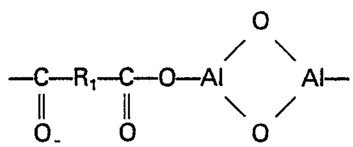

or

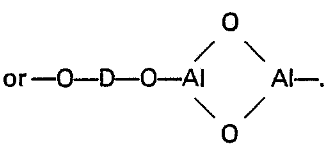

The aluminium atom may also be included in the bonding to the monocarboxylic acid residue (IV), as mentioned later. It is necessary that the molar ratio (I):(III) be in the range 1,000:1 to 20:1. If residue (III) is in lesser amount than that, the adhesion-increasing effect can hardly be produced. Conversely, the use of (III) in excess of the upper limit of that range may unfavourably cause gelation during polymerization or, if a monocarboxylic acid is added in a fairly large amount for preventing gelation, result in a decreased molecular weight due to the chain termination effect of such an acid.

In the residue IV, the aliphatic monocarboxylic acids include not only straight-chained saturated acids such as caproic acid, enanthic acid, caprylic acid, pelargonic acid, capric acid, undecylic acid, lauric acid, tridecylic acid, myristic acid, pentadecylic acid, palmitic acid, margaric acid, stearic acid, nonadecylic acid, arachic acid and melissic acid but also unsaturated acids such as oleic acid, linoleic acid, linolenic acid and arachidonic acid and substituted acids such as 12-hydroxystearic acid and 2-ethylhexanoic acid. The alicyclic monocarboxylic acid includes cyclohexanecarboxylic acid, cyclopentanecarboxylic acid and 2-decahydronaphthalenecarboxylic acid, etc. The aromatic monocarboxylic acids include benzoic acid, phenylacetic acid, diphenylacetic acid, β-naphthoic acid, anthracene-2-carboxylic acid, p-hydroxybenzoic acid, p-ethylbenzoic acid and 1-chloroanthraquinone-2-carboxylic acid. Among those preferred are straight-chained saturated aliphatic monocarboxylic acids, benzoic acid and *p*-hydrobenzoic acid, benzoic acid being especially preferred. These monocarboxylic acid-derived univalent groups (IV) are bonded either to (II) by the ester bond

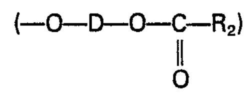

or to (III) by the carboxylate salt bond

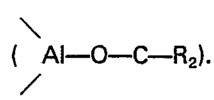

It is necessary that the molar ratio (III):(IV) be in the range of 4:1 to 1:10. If the amount of residue (IV) is insufficient as compared with that range, the melt flowability of the product polyester will be damaged due to the branch-forming effect of (III) becoming excessive or, in extreme cases, gelation will occur during polymerization to make the subsequent polymerization procedure inoperable, whereby no practicable polyester can be obtained. Conversely, if (IV) is too abundant as compared with the above range, the chain

termination effect of (IV) becomes significant and renders it difficult to produce high polymerization degree polyesters.

The polyester according to the invention has an intrinsic viscosity of not less than 0.5 dl/g, preferably not less than 0.6 dl/g, as determined in a phenol-tetrachloroethane mixed solvent (1:1 in weight ratio) at 30°C. If the intrinsic viscosity is less than 0.5 dl/g, the mechanical strength of the polyester is unsatisfactory. When subjected to lamination by coextrusion with one or more other thermoplastic resins such as an EVA copolymer, the polymer according to the invention preferably has an intrinsic viscosity of not less than 0.7 dl/g, particularly not less than 0.8 dl/g. There is no particular upper limit to the intrinsic viscosity. However, it is difficult to conduct the polyermization to attain an intrinsic viscosity of 2.0 dl/g or higher.

As mentioned above, the polyester according to the invention comprises the constituent units (I), (II), (III) and (IV). The dicarboxylic acid unit (I) and/or diol unit (II) may partly (preferably not more than 10 mole percent) be replaced by another dicarboxylic acid and/or diol unit, respectively. Such dicarboxylic acid units include those derived from oxalic acid, hexahydroterephthalic acid, sodium 3,5-dicarboxylbenzene sulphonate, chloroterephthalic acid, bromoterephthalic acid, dichloroterephthalic acid, dibromoterephthalic acid, bromoisophthalic acid, naphthalenedicarboxylic acid (any of the isomers), chloronaphthalenedicarboxylic acid, bromonaphthalenedicarboxylic acid, diphenyl ether dicarboxylic acid or diphenyl-4,4'-dicarboxylic acid. The diol unit may be, for instance, derived from polyethylene glycol, polytetramethylene glycol, neopentyl glycol, 1,4-bis(β-hydroxyethoxy)benzene, 2,2-bis(*p*-β-hydroxyethoxyphenyl)propane or bis(*p*-β-hydroxyethoxyphenyl sulphone.

As is mentioned above, the polyester according to the invention to be used in lamination by coextrusion with other thermoplastic resins such as an EVA copolymer preferably has an intrinsic viscosity of not less than 0.7 dl/g. Such a polyester can be produced by conducting the polymerization over a sufficiently long period or carrying it out in the presence of a specific amount of a polyfunctional organic compound containing 3 or 4 hydroxyl and/or carboxyl groups in its molecule. When mere extension of the polymerization period cannot result in a satisfactorily high degree of polymerization or when the polymerization period cannot be sufficiently extended because of thermal degradation, the latter measure is effective. The polyesters according to the invention that contain such polyfunctional organic compounds are those containing at least one of the polyvalent residues (V), (VI), (VII) and (VIII) mentioned above.

Residue (V) is derived from an aliphatic triol or tetraol containing 3—9 carbon atoms, typically glycerol, trimethylolpropane, pentaerythritol, 1,2,6-hexanetriol, trimethylolethane, trimethylolpentane or trimethylolhexane.

Residue (VI) is derived from a benzenetrialkanol containing a straight-chained $C_{1-4}$ alkylene group between the benzene nucleus and each hydroxyl group, such as 1,3,5-trimethylolbenzene, 1,3,5-tripropylolbenzene or 1,3,5-tributylolbenzene.

Residue (VII) is the unit derived from a benzenetricarboxylic or benzenetetracarboxylic acid, such as trimellitic acid, trimesic acid or pyromellitic acid.

Residue (VIII) is derived from a polyfunctional hydroxycarboxylic acid composed of a $C_{2-4}$ organic radical containing a total of 3 or 4 hydroxyl and carboxyl groups, typically malic acid, 3-hydroxyglutaric acid, citric acid and 2,2-dimethylol propionic acid. The polyester of the invention may contain one or more of residues (V)—(VIII). The carboxyl-derived valency bonds of such residues are bound either to the hydroxyl-derived valency bonds of residues (II), (V), (VI) and (VIII) by ester bonding or to residue (III) by carboxylate salt bonding. The hydroxyl-derived valence bonds of the polyfunctional organic compound units are bound either to the carboxyl-derived valency bonds of residues (I), (IV), (VII) and (VIII) by ester bonding or to residue (III) by alkoxide bonding. The total amount of the above polyfunctional organic compound residues is preferably not more than 1 mole percent based on residue (I). A total polyfunctional organic compound unit content exceeding this tends to cause gelation of the polyester products due to their markedly branched structure or to cause significant chain termination due to the presence of a large amount of the monocarboxylic acid residue (IV), which is additionally used to control the degree of branching as mentioned below, thereby causing a decrease in the attainable molecular weight so that desired polyesters can hardly be obtained. The polyester according to the invention contains, as mentioned above, the monocarboxylic acid residue (IV) in an amount corresponding to a (III):(IV) molar ratio in the range of 4:1 to 1:10, in order to control of the branch-forming effect of the aluminium atom. When any of polyfunctional organic compound units (V)—(VIII) are included, this amount of (IV) alone may, in some cases, be insufficient to inhibit gelation due to the branching caused by the polyfunctional organic compound units. Therefore, the polyester according to the invention, when it contains the polyfunctional organic compound units, may contain an additional amount of residue (IV), viz. up to 15 times the total number of moles of the polyfunctional organic compound units (V)—(VIII). A still larger amount of (IV) will produce a substantial polyester-chain-termination effect so that a satisfactorily high degree of polymerization can hardly be obtained.

In some cases, a haze of the polyester according to the present invention is formed, probably caused by crystallization of the polyester around room temperature. To prevent this, a powdered (e.g. colloidal) silica of mean particle size 150 to 450Å (15 to 45 nm), mixed if desired with water or an alcohol, to the reaction system. The colloidal silica ordinarily used is a dispersion of the powdered silica in water or alcohols, e.g. Snowtex—20L (Trade Mark) manufactured by Nissan Chemical Industries, Ltd. The amount of

silica is preferably in the range 0.1 to 5 and particularly 0.2 to 1 weight % based on the polyester as the solid component.

A method of producing the polyester according to the invention comprises polycondensing at least one dicarboxylic acid capable of providing the residue (I) or an ester-forming derivative of it with at least one diol capable of providing the residue (II) in the presence of an aluminium compound of the formula

$$Al(O—R_5)_i(OCO—R_6)_j(O—\underset{\underset{\displaystyle R_7}{|}}{C}=CH—CO—R_8)_k$$

In the formula, $R_5$ is a univalent group derived from an aliphatic, alicyclic or monocyclic aromatic alcohol by removal of the hydroxy group, preferably a lower alkyl group such as propyl or butyl, $R_6$ is as defined above for $R_2$, a univalent group derived from a $C_{1-5}$ aliphatic monocarboxylic acid, which may optionally be substituted, for example, by a hydroxyl group, by removal of its carboxyl group, or a univalent group derived from a monoester or mono(alkali metal) salt of a dicarboxylic acid corresponding to $R_2COOH$ or to an aliphatic monocarboxylic acid by removal of the free carboxyl group, preferably a phenyl or *p*-hydroxyphenyl group or a straight-chained alkyl group containing 5 to 17 carbon atoms, preferably a phenyl group, $R_7$ is a methyl or phenyl group, $R_8$ is a methyl or phenyl group or a univalent group derived from an aliphatic alcohol by removal of the hydroxyl proton, and each of i, j and k represents the average number of respective groups bonded to the aluminium atom, such that i+j+k=3, is from 0 to 2 inclusive and each of j and k from 0 to 3 inclusive.

Although any of the aluminium compounds having the above formula can be used in the practice of the invention, a compound approximately represented by the formula $Al(OCHMe_2)(OCOPh)_2$ is preferred.

The above aluminium compound is preferably added to the reaction system at a temperature of 180—300°C (especially 180—250°C) after the esterification reaction between the dicarboxylic acid and the diol has advanced to such an extent that the carboxyl group content of the reaction system is already slight or when the transesterification between the dicarboxylate ester and the diol is almost complete. In particular, the above aluminium compound is preferably added after completion of the transesterification since it may inactivate conventional transesterification catalysts. In a preferred mode of addition, it is added in the form of a solution or suspension in the diol. The above aluminium compound can be produced by various known methods, one of which will be illustrated in the examples. When a monocarboxylic acid or an ester of it capable of providing the residue (IV) and/or polyfunctional organic compounds capable of providing residues (V)—(VIII) (polyhydric alcohols, polybasic carboxylic acids and polyfunctional hydroxycarboxylic acids corresponding to residues (V)—(VIII), inclusive of their esters and cyclic acid anhydrides when they contain carboxyl groups) are used together with the above aluminium compound, they are added to the reaction system when the raw materials are charged or prior to the esterification or transesterification reaction. When transesterification is used, they may be added immediately after the transesterification reaction.

The esterification of the dicarboxylic acid with the diol or the transesterification between the dicarboxylic acid ester and the diol and the subsequent polycondensation can be carried out under conventional polyester polymerization conditions. Thus, for example, the esterification of the dicarboxylic acid with the diol or the transesterification between a dialkyl ester of the dicarboxylic acid and the diol is conducted at a temperature of 180—230°C in the absence or presence of a catalyst such as a zinc, calcium or manganese compound, and then the polycondensation is effected at a temperature of 260—300°C and an absolute pressure of 1 mmHg (133 Pa) or below using, for example, an antimony, titanium or germanium compound as a catalyst. In that case, a phosphoric acid compound may be added as a heat stabilizer.

As stated above, the addition of the colloidal silica is effective for preventing the haze of the polyesters due to the crystallization. In this case, it is preferred that the colloidal silica be mixed with the diol component and then added to the reaction system.

Upon addition of the above-mentioned aluminium compound to the reaction system, the $R_5$—O— and

$$R_8COCH=\underset{\underset{\displaystyle R_7}{|}}{C}—O—$$

residues for the most part react with and are bound to the dicarboxylic acid or diol component with liberation of the corresponding alcohol $R_5OH$ and β-diketone or keto acid $R_8COCH_2COR_7$, respectively, which are transferred to the distillate fraction. When the $R_6$ group is identical with $R_2$ in formula (IV), the $R_6COO$— group partly remains bound to Al in the polyester product and the remaining portion is eliminated as a result of the exchange reaction with the dicarboxylic acid and bound to the terminal of the polyester molecule. When $R_6$ is a group derived from a monocarboxylic acid containing not more than 5 carbon atoms by removal of its carboxyl group, it is transferred for the most part to the distillate in the form of the corresponding monocarboxylic acid or its alkyl ester. In this way, Al is bound to the polyester molecule in the middle and/or at the end either directly by alkoxide or carboxylic acid salt bonding or indirectly through an interposing alumina bond. In this manner, most of the Al added is bound to the polyester and

accordingly the above-mentioned aluminium compound is suitably added to an amount of 0.1 to 5 moles per 100 moles of the dicarboxylic acid. The monocarboxylic acid for providing the residue (IV) is preferably added in an amount such that the sum of the number of moles of the $R_2COO$— group in the aluminium compound and the number of moles of the monocarboxylic acid ($R_2COOH$) or its ester of 0.25—10 times the number of moles of Al. Furthermore, when polyfunctional organic compound for providing the polyfunctional organic residues (V)—(VIII) are added, they are for the most part introduced into the polyester and therefore they are preferably added in a total amount of not more than 1 mole per 100 moles of the dicarboxylic acid. When, correspondingly, the monocarboxylic acid ($R_2COOH$) or its ester is added additionally, it is preferably added in a total amount of not more than 15 moles per mole of the above polyfunctional organic compounds.

That the above method gives the polyester of the invention is confirmed by the following facts:

(1) The contents of the $R_5$—O— and

$$R_8COCH{=}\underset{\displaystyle R_7}{\underset{|}{C}}—O—$$

groups in the aluminium compound almost correspond to the amounts of $R_5OH$ and $R_8COCH_2COR_7$ detected in the distillate, respectively.

(2) Microanalysis by 400 MHz high resolution nuclear magnetic resonance (NMR) spectrometry reveals that the $R_2COO$— group is present in the polyester in an amount corresponding to the sum of the amount of $R_2COO$— in the aluminium compound added and the amount of the monocarboxylic acid or its ester added separately.

(3) X-ray fluorometry shows that the A1 atom is present in the polyester in a content almost equal to the amount added.

(4) Fourier transform infrared absorption (FT—IR) spectrophotometry of the polyester indicates that new absorptions, which cannot be observed with the conventional polyesters, are found at 1600 $cm^{-1}$ and 590 $cm^{-1}$. The former absorption is an absorption of an carboxylic acid aluminium salt, as described, for example, in Analytical Chemistry, volume 24, page 635 (1952). The latter absorption is an absorption of a metal alkaoxide, as taught in D. M. Adams: "Metal-Ligand and Related Vibrations", Edward Armold (London). Since alumina ($Al_2O_3$) shows an absorption at about 590 $cm^{-1}$, the absorption of alumina bonds existing in part in the polyester supposedly overlaps with the alkoxide absorption. Alumina ($Al_2O_3$), which has a macromolecular structure constructed by alumina bonding, is not dissolved uniformly in the polyester in the molten state, but renders the molten polyester opaque. On the other hand, the polyester according to the invention is transparent in the molten state. Therefore, it is supposed that the above macromolecular alumina structure, resulting from alumina bond chain and network formation, is absent in the polyester of the invention, and even if a consecutive repetition of the constituent unit (III) is present, the number of repetitions is presumably small.

Japanese Patent Publication No. 41—9,808 and Japanese Patent Publication No. 48—20,014 disclose polyester species with aluminium atoms introduced into them. However, the polyester of the present invention is quite different from them in structure and characteristics. The polyester disclosed in Japanese Patent Publication No. 41—9,808 is the one modified with aluminium chloride or an aluminium alkoxide. When the former modifier is used, the aluminium atoms introduced into the polyester are supposed to have Al—Cl bonding. Such (Al—Cl bond)-containing polyesters, did not show adhesiveness. The polyesters obtained by using aluminium alkoxides as modifiers contained insoluble particles in large amounts and did not show adhesiveness. Japanese Patent Publication No. 48—20,014 discloses a heat-curable adhesive composition for the adhesion of aluminium sheets prepared by adding an organic aluminium compound to a solution of a polyester in an organic solvent so as to cause crosslinking. Since, in such a composition, aluminium-caused crosslinking takes place on heating, the compositions can hardly be used in melt-adhesion to adherends or in subjecting laminated articles produced by using the adhesive to thermoforming as the secondary forming. In other words, the use of such a composition is restricted from the viewpoint of moulding or forming when thermoplastic resins are the adherends. The present invention has made it possible to produce for the first time those polyester species that have adhesiveness as well as heat melt flowability by introducing into the polyester molecule both the trivalent aluminium atom, which is capable of causing crosslinking, and the monocarboxylic acid unit.

The thus-obtained polyester according to the invention is superior to the conventional polyesters in adhesion to hydroxyl- and/or carboxyl-containing polymers and to metals and is of course excellent in adhesion to polyesters. Furthermore, it is harmless to human beings and other living creatures, is only slightly susceptible to thermal degradation or discoloration in the molten state, and has good stretchability. Therefore, it is very useful as a constituent material of various laminated articles or as an adhesive for such articles.

The polyester according to the invention is used mainly as an adhesive or a base for laminated articles. This mode of practice is described below in more detail.

For use as an adhesive, the polyester according to the invention preferably has a glass-transition temperature not higher than 30°C, because such a polyester has, in addition to the affinity for polymers

containing polar groups such as hydroxyl and/or carboxyl, which is provided by the aluminium atoms, an improved adhesiveness due to the flexibility of the polyester itself. Preferred adherends to the adhesive comprising the polyester according to the invention are polymers containing hydroxyl and/or carboxyl groups in the molecule, polyesters and various metals, since the adhesive produces firm and strong adhesion with such materials. As the above-mentioned hydroxyl- and/or carboxyl-containing polymers, there may be mentioned, for example, such hydroxyl-containing polymers as EVA, vinyl alcohol homopolymers and copolymers, cellulose, and such carboxyl-containing polymers as maleic-anhydride-modified polyethylene, maleic-anhydride-modified EVA copolymer, ethylene-acrylic acid copolymer and other olefinic polymers, each containing 0.1 to 10 mole % (on a constituent unit basis) of pendent carboxyl groups or anhydride rings derived from them. The carboxyl groups in the above-mentioned polymers may be partially in the form of a cyclic anhydride or metal salt (e.g. a sodium, potassium or calcium salt).

The adhesive comprising a polyester according to the invention is used by a suitable technique such as extrusion lamination, which comprises applying the adhesive in the molten state to a moulded adherend (e.g. one made of any various resins or metals) followed by joining with the other adherend, the coextrusion method, which comprises simultaneously melting and extruding the adhesive together with both adherends for lamination, the heat lamination method, which comprises interposing the adhesive in powder, film or chip-like form between adherends followed by heating under pressure, and the dry lamination method, which comprises dissolving the adhesive in a suitable organic solvent (e.g. halogenated hydrocarbon, ether or ester), applying the solution to one adherend, removing the solvent, joining with the other adherend, and heating under pressure.

In this manner, the use of the polyester according to the invention as an adhesive can provide various laminated articles composed of at least three layers with the layer (A) of the adhesive interposed between two adherend layers (B) and (C), which may be of the same material or different materials. Thus, the laminated articles may have a three-layer construction represented by (B)/(A)/(C). In addition, they may have more complicated laminate constructions including such a three-layer construction, i.e. constructions comprising four or more layers, such as (B)/(A)/(C)/(D), when the material of (D) is different from that of (C), e.g. polyethylene, polypropylene, polyvinylidene chloride or nylon; (B)/(A)/(C)/(A)/(E), where the material of (E) is the same as or different from that of (B) and/or (C); and (B)/(A)/(C)/(A)/(E)/(D), with a very large number of other various combinations.

Among laminates having the above constructions, particularly useful are those comprising at least three layers made by adhesion of a conventional polyester (base) material and an EVA copolymer with the polyester adhesive according to the invention, such as those having the constructions

(a) conventional polyester (base)/polyester of the invention (adhesive)/EVA copolymer;

(b) conventional polyester (base)/polyester of the invention (adhesive)/EVA copolymer/polyester of the invention (adhesive)/conventional polyester (base); and

(c) conventional polyester (base)/polyester of the invention (adhesive)/EVA copolymer/polyester of the invention (adhesive)/conventional polyester (base)/heat-sealable resin, for reasons *inter alia* of their excellent mechanical strength, water resistance, gas barrier function and mouldability or processability. The above-mentioned conventional polyester (base) layer offers the mechanical strength and water resistance whereas the EVA copolymer layer serves as the gas barrier. In enjoying the advantages of both the resins, which are complementary to each other, more advantageous are five-layered laminates having the construction (b) above the laminates comprising six or more layers with one or more other layers laminated to such a construction.

The conventional polyesters constituting the base are required, *inter alia* to be self-supporting and to have mechanical strength and resistance to shock and water. Therefore, polyethylene terephthalate, polybutylene terephthalate and copolyesters in which terephthalic acid accounts for not less than 80 mole percent of the dicarboxylic acid component and ethylene glycol or 1,4-butanediol accounts for not less than 70 mole percent of the diol component are preferred. The preferred comonomer components include isophthalic acid, 1,4-cyclohexanedimethanol and diethylene glycol. Especially preferred are polyethylene terephthalate and copolyesters in which ethylene terephthalate units account for not less than 80 mole percent of the repeating units. EVA copolymer (saponified copolymer of ethylene and vinyl acetate) is required to serve as a gas barrier, hence it preferably has an ethylene content of 20—60 mole percent (especially 25—50 mole percent) and a saponifcation degree of not less than 95 mole percent (particularly not less than 98 mole percent).

When the polyester according to the invention is to be used as a base for laminates, it is preferable from the mechanical strength and other viewpoints that it have a glass transition temperature of not lower than 30°C and/or, if it is crystalline, a melting point not lower than 120°C. Polyesters having such glass transition temperature and melting point can be obtained by selecting the dicarboxylic acid residue (I) and diol residue (II) in the main among the constituent units. Such polyesters have adhesiveness to polymers containing carboxyl groups in the molecule as well as good mechanical properties like those of the conventional polyesters. Therefore, the use of the polyester according to the invention as a base (F) gives various laminates, such as one made by laminating a carboxyl-containing polymer (G) to the base (F) or one made by further laminating another layer to it. Examples of the layer construction are (F)/(G), (F)/(G)/(H), where (H) is the same as or different from (F), (G)/(F)/(I), when (I) is the same as or different from (G), (I)/(F)/(G)/(H), (F)/(G)/(H)/(G)/(F) and (G)/(F)/(I)/(F)/(G).

The carboxyl-containing polymers include those mentioned above. Since such polymers are good adhesives to EVA copolymers, there can be obtained polyester/EVA copolymer laminates with the carboxyl-containing polymer interposed. Thus, there can be obtained laminates having mechanical strength and at the same time gas barrier function, such as those having the constructions

(d) polyester of the invention (base)/carboxyl-containing polymer/EVA copolymer and

(e) polyester of the invention (base)/carboxyl-containing polymer/EVA copolymer/carboxyl-containing polymer/polyester of the invention (base). Such laminates can be produced by various methods, such as extrusion lamination, coextrusion, dry lamination and heat lamination. The EVA copolymer may be one of those mentioned already.

By using a polyester according to the invention as an adhesive or a base, there can be obtained various laminates, which may have the form of a film, sheet, tube or cup. More complicated forms such as bottles can be obtained by a secondary processing following the production of the laminates. Each layer of these laminates may contain various additives e.g. pigment, dye, antioxidant, ultraviolet stabilizer, filler and nucleating agent, as necessary. Co-stretching of the thus-obtained laminates increases or improves their mechanical strength, gas barrier function and other properties. Thus, for instance, co-stretched laminate films made from laminated films, co-stretched laminate cups or trays made from laminated sheets, e.g. by pressure forming, vacuum forming or draw forming, and co-stretched laminated hollow vessels (e.g. bottles) made from laminated hollow bodies (e.g. tubes, cups or closed-end parisons) by blow moulding or stretch blow moulding, for instance, are preferred embodiments in which the polyester of the invention is used. In accordance with a typical embodiment of the invention, there are provided *inter alia* laminated hollow vessels made by laminating the polyester and an EVA copolymer. Such hollow vessels can be produced by subjecting tubes or closed-end parisons comprising at least three layers and having, for example, the construction (a) or (d) defined above to blow moulding or stretch blow moulding by the conventional method. Preferred layer constructions for producing hollow vessels are (b) and (e) above. The coextrusion method is favourable for forming the laminated tubes and other laminates from the viewpoint of productivity, and the polyester according to the invention, when it is to be processed by that method, preferably has an intrinsic viscosity of not less than 0.7 dl/g, particularly not less than 0.8 dl/g. When the intrinsic viscosity is lower than that value, it does not conform to the viscosity of an EVA copolymer generally used for forming purposes, so that it is difficult to conduct lamination by coextrusion in a uniform thickness. In cases where laminates obtained by using the polyester of the invention as an adhesive are co-stretched, the polyester should preferably be noncrystalline or a crystalline polyester having a melting point not higher than 120°C for laminates generally co-stretched at 80°C to 120°C. It is thus possible to obtain preferred hollow vessels, which are free of irregularity in thickness or interlayer separation and have good mechanical strength, shock resistance, water resistance, gas-barrier function and transparency, and the use of which for drinks such as fruit juices, carbonated drinks and beer, improves the long-period preservability of the contents.

The following examples illustrate but do not limit the invention. Reference will be made to the accompanying drawings, in which

Fig. 1 shows the nuclear magnetic resonance spectrum of the polyester obtained in Example 1,

Fig. 2, Fig. 4, Fig. 5 and Fig. 6 show the infra-red absorption spectra of the polyesters obtained in Examples 1, 2, 8 and 18, respectively, and

Fig. 3 shows the infrared absorption spectrum of polyethylene terephthatlate.

The melting point of each crystalline polyester referred to or reported herein is the value determined on a differential scanning calorimeter (DSC). The values appearing in the examples were also determined by this method. Thus, 5 mg of a quenched film was heated from room temperature at a rate of 20K/minute and the peak temperature at which crystals melted was regarded as the melting point. The glass transition temperature of the polyester is also the value determined on a DSC. The data given in the examples are also the values determined in the same manner. The rate of temperature raising was 20K/minute. The intrinsic viscosity may be denoted by the symbol [η]. The rate of temperature raising was 20K/minute.

## Example 1

Preparation of the aluminium compound

100 ml of hexylene glycol was put in a 300-ml round-bottomed flask fitted with nitrogen-gas inlet tubing, stirrer and condenser and, with the introduction of nitrogen gas and at room temperature, 0.10 mole of aluminium isopropoxide powder was added and stirred. 0.05 mole of caprylic acid and 0.15 mole of *p*-hydrobenzoic acid were then added and the mixture was heated to 100°C in an oil bath with stirring. With this temperature maintained, the reaction was continued for 15 minutes. Thereafter, 0.10 mole of acetylacetone was added and the reaction was continued at 100°C for 15 minutes to prepare a solution of an aluminium compound.

The infrared absorption spectrum of this solution showed that while a slight absorption of unreacted carboxylic acids was observed at 1700 $cm^{-1}$, the absorption of aluminium carboxylate at 1600 $cm^{-1}$ and that of the acetylacetone complex salt at 1540 $cm^{-1}$ were both intensely observed, indicating that the alcoholate bonds were converted to carboxylate and acetylacetonate complex bonds.

Polymerization

A 300-ml three-necked flask fitted with nitrogen-gas inlet tubing, stirrer and condenser was charged with 100 g of dimethyl terephthalate, 68 g of ethylene glycol and 40 mg of zinc acetate, and the mixture was heated at 200°C in a nitrogen gas stream for 3 hours to effect the transesterification reaction. Then, 0.025 ml of tributyl phosphate and 40 mg of anitmony trioxide were added at 200°C. The above-mentioned aluminium-compound solution was added at a concentration of 0.52 mole of aluminium atom to each 100 moles of dimethyl terephthalate so as to dissolve the aluminium compound in the contents of the flask. The temperature of the oil bath was increased to 260°C and then, under gradual decompression, to 280°C, and the polymerization was conducted at a reduced pressure of 0.1 mmHg (13 Pa) for 90 minutes, whereby a light-green polymer was obtained. This polyester in molten state was transparent and had an intrinsic viscosity of 0.71 dl/g. It had a glass transition temperature of 74°C and a melting point of 252°C.

The NMR spectrum of the above polyester is shown in Figure 1. The spectrum showed peaks assignable to the methylene protons of caprylic acid at 0.90 ppm and the phenyl protons of *p*-hydroxybenzoic acid at 6.65 ppm. The caprylic acid content of the polymer as determined from this spectrum was slightly less than the amount calculated from the charged amount but the *p*- hydroxybenzoic acid content was in substantial agreement with the charge.

The FT—IR spectrum of this polyester is shown in Figure 2. Weak absorptions are noted at 1600 $cm^{-1}$ and 590 $cm^{-1}$, which are not found in the spectrum of polyethylene terephthalate in Figure 3. As mentioned in the detailed description, the absorption at 1600 $cm^{-1}$ is due to the aluminium carboxylate and that at 590 $cm^{-1}$ is due to the aluminium alcoholate and alumina bonds.

Example 2

A 300-ml three-necked flask fitted with nitrogen-gas inlet tubing, stirrer and condenser was charged with 100 g of dimethyl terephthalate, 68 g of ethylene glycol, 0.88 g of methyl benzoate and 40 mg of zinc acetate and the contents were heated at 200°C in a nitrogen gas stream for 3 hours to effect the transesterification reaction. Then, 0.025 ml of tributyl phosphate and 40 mg of antimony trioxide were added, followed by addition and dissolution of aluminium acetylacetonate in a ratio of 0.50 mole to 100 moles of dimethyl terephthalate. The temperature of the oil bath was increased to 260°C and then, under gradual decompression, to 280°C and the polymerization reaction was conducted at a reduced pressure of 0.1 mmHg (13 Pa) for 90 minutes, whereby a light-yellow polymer was obtained. This polyester in molten state was transparent and had an intrinsic viscosity of 0.70 dl/g. The glass transition temperature and melting point of the polyester were 78°C and 253°C, respectively.

The FT—IR spectrum of this polyester is shown in Figure 4, which indicates an absorption of aluminium carboxylate at 1600 $cm^{-1}$ and an absorption of aluminium alcoholate and alumina bonds at 590 $cm^{-1}$.

Analysis of the NMR spectrum of the distillate obtained during the period after the transesterification reaction till completion of polymerization of this polyester showed a signal assignable to acetylacetone, and a quantitative assay of this fraction gave a result substantially corresponding to the amount of acetylacetone in the aluminium acetylacetonate added. The above findings indicate that the aluminium acetyl-acetonate released acetylacetone in the course of polymerization to form the aluminium carboxylate, aluminium alcoholate and Al—O—Al bonds.

Example 3

Preparation of the aluminium compound

100 ml of hexylene glycol was put in the equipment of Example 1 under a nitrogen gas supply and 0.10 mile of aluminium isopropoxide was added and stirred. Then, 0.05 mole of caprylic acid and 0.15 mole of *p*-hydrobenzoic acid were added and the mixture was heated to 100°C in an oil bath under stirring. At this constant temperature the reaction was carried out for 15 minutes. Then, 0.10 mole of ethylene acetoacetate was added and the reaction was further conducted at 100°c for 15 minutes to prepare an aluminium compound solution.

Polymerization

In the same manner as Example 1, the transesterification reaction between dimethyl terephthalate and ethylene glycol was conducted followed by addition of 0.025 ml of tributyl phosphate and 40 mg of antimony trioxide. Then, the above-mentioned aluminium compound solution was added in such a proportion that the level of addition of aluminium in terms of Al atom was 0.52 mole per 100 moles of dimethyl terephthalate. The temperature was increased to 260°C, and under gradual decompression, to 280°C. The system was further decompressed to 0.1 mmHg (13 Pa) and the polymerization reaction was conducted at this pressure for 90 minutes. The resulting polyester was light-yellow and, in molten state, was transparent and completely free from insoluble matter. The intrinsic viscosity of this polyester was 0.76 dl/g and its glass transition temperature and melting point were 75°C and 251°C, respectively.

Example 4

A 300 ml three-necked flask fitted with nitrogen-gas inlet tubing, stirrer and condenser was charged with 70 g of dimethyl terephthalate, 30 g of dimethyl isophthalate, 68 g of ethylene glycol and 40 mg of zinc

acetate and the transesterification reaction was conducted at 200°C in a nitrogen gas stream for 3 hours. Then, 0.025 ml of tributyl phosphate and 40 mg of antimony trioxide were added, and the aluminium compound solution prepared in Example 1 was added in a proportion such that the level of addition of aluminium in terms of Al atom was 0.52 mole to each 100 moles of dimethyl terephthalate and dimethyl isophthalate combined. The polymerization reaction was conducted under the same conditions of Example 1. The resulting polymer was a light-yellowish-green transparent glassy polymer. The DSC glass transition temperature of this polymer was about 65°C but, being amorphous, its melting point could not be determined. The intrinsic viscosity of this polyester was 0.72 dl/g.

## Example 5

A 300-ml round-bottomed flask fitted with nitrogen-gas inlet tubing, stirrer and condenser was charged with 97 g of dimethyl terephthalate, 0.85 g of methyl benzoate, 57.4 g of ethylene glycol, 25.2 g of 1,4-cyclohexanedimethanol and 40 mg of zinc acetate, and the contents were heated at 200°C in a nitrogen gas stream for 3 hours to effect the transesterification reaction. Then, 0.025 ml of tributyl phosphate, 40 mg of antimony trioxide and 1.0 g of aluminium acetylacetonate were added and the mixture was heated to 260°C and, under gradual decompression, to 280°C. At a vacuum of about 0.1 mmHg (13 Pa), the polymerization reaction was conducted for 90 minutes. The resulting polymer was a light-green glassy polymer which, in the molten state, was transparent. The intrinsic viscosity of this polymer was 0.68 dl/g, and its DSC glass transition temperature of the polymer was 78°C. Being amorphous, its melting point was not determined.

## Example 6

A polymerization vessel similar to that used in Example 1 was charged with 100 g of dimethyl terephthalate, 100 g of 1,4-butanediol and a solution of 40 mg of tetrabutyl titanate in *n*-hexane, and transesterification was conducted at 180°C for 1 hour, 200°c for 1 hour and 220°c for 1 hour. Then, the same aluminium compound solution as used in Example 1 was added so that the level of addition of aluminium was 0.2 mole to each 100 mole of dimethyl terephthalate, and the mixture was heated to 260°C and, under gradual decompression, to 270°C. The pressure was further reduced to about 0.1 mmHg (13 Pa), at which pressure the polymerization reaction was conducted for 90 minutes. The resulting polyester was a light-yellow crystalline polyester. Being a highly crystalline compound, its glass transition temperature was not determined but its melting point was 221°C. The polyester in molten state was transparent and had an intrinsic viscosity of 0.73 dl/g.

## Example 7

A reaction vessel similar to that described in Example 1 was charged with 64.0 g of bis-beta-hydroxyethyl terephthalate, 25.0 g of succinic anhydride, 15.5 g of ethylene glycol and 14.9 g of diethylene glycol, and the contents were reacted at 200°C in a nitrogen gas stream for 1 hour. The temperature was then increased to 215°C and the reaction was further continued for 1 hour. Thereafter, 0.025 ml of tributyl phosphate and 36 mg of antimony trioxide were added and the same aluminium compound solution as used in Example 1 was added so that the level of addition of atomic aluminium was 0.50 mole per 100 moles of the dicarboxylic acid component. The temperature was increased to 260°C and, under gradual decompression, further to 275°C. The pressure was finally reduced to about 0.1 mmHg (13 Pa) and the polymerization reaction was conducted for 90 minutes. The resulting polyester was a light-yellow polymer which was transparent and resembled hard rubber at room temperature. The glass transition temperature of the polymer was 27°C but being amorphous, its melting point was not determined. The intrinsic viscosity of this polyester was 0.64 dl/g.

## Example 8

A polymerization vessel similar to that used in Example 1 was charged with 64 g of bis-beta-hydroxyethyl terephthalate, 36.5 g of adipic acid, 15.5 g of ethylene glycol and 14.9 g of diethylene glycol, and the esterification reaction was conducted at 200°C in a nitrogen gas stream for 5 hours. Then, 0.025 ml of tributyl phosphate and 36 mg of antimony trioxide were added and the same aluminium compound solution as used in Example 1 was added so that the level of addition of aluminium atom was 0.5 mole per 100 moles of the dicarboxylic acid component. The temperature was increased to 260°C and, under gradual decompression, to 280°C. The pressure was finally reduced to about 0.1 mmHg (13 Pa), at which pressure the polymerization reaction was conducted for 1 hour. The resulting polymer was an orange-coloured polyester resembling hard rubber. It was transparent in the molten state. Its glass transition temperature was −5°C but as it was amorphous, its melting point was not determined. The intrinsic viscosity of this product was 0.59 dl/g. The FT—IR spectrum of this polyester is shown in Figure 5.

## Example 9

Preparation of the aluminium compound

In a 1-litre flask, 30.6 g (0.15 mole) of aluminium isopropoxide was dissolved in 150 ml of *n*-hexane, and, in a nitrogen gas stream at 20°C, a solution of 36.6 g (0.30 mole) of benzoic acid in 148 ml of isopropyl alcohol was added dropwise over a period of 20 minutes. The mixture was stirred at that temperature for 15 minutes and the precipitated aluminium compound was recovered by filtration. This white powder was

dried *in vacuo* at 50 to 60°C for 4 hours. Yield 45.6 g.

Polymerization

A reaction vessel similar to that used in Example 1 was charged with one or more of the dicarboxylic acid dimethyl esters ($CH_3OOC—R_1—COOCH_3$) and one or more of the diols (HO—D—OH) listed in Table 1, in a molar ratio of 0.5:1.1. The transesterification reaction was conducted and the excess of diol was removed under the same conditions as in Example 1. Then, a suspension of the above aluminium compound (0.6 weight % of the theoretical yield of polyester, i.e. 0.4 to 0.7 mole % based on dicarboxylic acid component) in a small amount of diol (ethylene glycol in Example 9*a* to *e* and 1,4-butanediol in Example 9*f* to *i* was added, and, in the presence of one or more of the polymerization catalysts mentioned in Table 1, the polymerization reaction was conducted in accordance with the procedure set forth in Example 1. In Example 9*i*, however, the polymerization was conducted at 260°C for 120 minutes. The intrinsic viscosity values of the polyesters thus produced are presented in Table 1. All the polyesters were transparent in the molten state.

TABLE 1

| Example | —$R_1$— in dicarboxylic acid component[1] | —D— in diol component[1] | catalyst | Intrinsic viscosity (dl/g) of product polyester |
|---|---|---|---|---|
| 9 (a) | 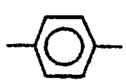 | $—(CH_2)_5—$ | Potassium titanium oxalate, 200 ppm | 0.62 |
| 9 (b) | 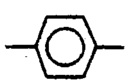 | $—(CH_2)_6—$ | " | 0.68 |
| 9 (c) | 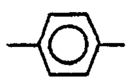 | $—(CH_2)_2—CH(CH_3)—(CH_2)_2—$ | " | 0.87 |
| 9 (d) | 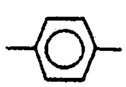 | $—(CH_2)_8—$ | " | 0.60 |
| 9 (e) | 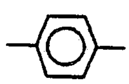 | $—(CH_2)_{10}—$ | " | 0.58 |
| 9 (f) | $—(CH_2)_4—$ | $—(CH_2)_2—$ | Zinc acetate, 300 ppm<br>$Sb_2O_3$, 400 ppm | 0.52 |
| 9 (g) | $—(CH_2)_8—$ | $—(CH_2)_2—$ | " | 0.66 |
| 9 (h) | 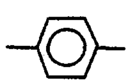 (60)<br>$—(CH_2)_8—$ (40) | $—(CH_2)_2—$ (70)<br>$—CH_2$ 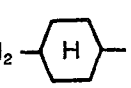 $CH_2—$ (30) | " | 0.92 |
| 9 (i) | 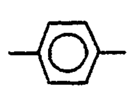 (60)<br>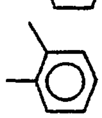 (5)<br>$—(CH_2)_4—$ (35) | $—(CH_2)_2—$ (87)<br>$—(CH_2)_6—$ (13) | Calcium acetate, 450 ppm<br>$Sb_2O_3$, 230 ppm | 0.68 |

Note 1: The figure in parenthesis represents mole %.

## Example 10

A 300-ml three-necked flask fitted with nitrogen-gas inlet tubing, stirrer and condenser was charged with 63.11 g of dimethyl terephthalate, 40.30 g of dimethyl sebacate, 60.29 g of ethylene glycol, 8.85 g of 1,6-hexanediol, 40 mg of zinc acetate, and a monocarboxylic acid, viz. caproic acid, lauric acid, palmitic acid, melissic acid, linolenic acid, diphenylacetic acid, benzoic acid, p-ethylbenzoic acid, β-naphthoic acid, anthracene-2-carboxylic acid and/or 1-chloroanthraquinone-2-carboxylic acid (1.25 mole % based on the combined amount of dimethyl terephthalate and dimethyl subacate), and the reaction was conducted in a nitrogen gas stream at 200°C for 3 hours, with removal of methanol. Then, 0.025 ml of tributyl phosphate, 40 mg of antimony trioxide and 0.81 g of aluminium acetylacetonate were added and dissolved, and the temperature was increased to 260°C and, under gradual decompression, to 280°C. At the reduced pressure of 0.1 mmHg (13 Pa) the polymerization reaction was conducted for 90 minutes. In this manner, the corresponding polyesters were produced. All of these polyesters were transparent in molten condition. Their intrinsic viscosity values were 0.72 to 0.86 dl/g, and the glass transition temperature and melting point of the polyesters were invariably −4°C and 78°C, respectively.

## Examples 11(a) to (i)

The transesterification and polymerization reactions were conducted in the same manner as in Example 10 except that the aluminium compound prepared in Example 9 was used dispersed in a small amount of 1,4-butanediol and that none of the monocarboxylic acids was used. The levels of addition of the aluminium compound relative to the combined amount of dimethyl terephthalate and dimethyl sebacate were 0.1, 0.2, 0.3, 0.4, 0.6, 0.8, 1.0, 2.0 and 4.0 mole %, which corresponds to Example 12(a), (b), (c), (d), (e), (f), (g), (h), and (i). The corresponding polyesters thus obtained were invariably transparent in molten condition. They had intrinsic viscosity values in the range of 0.75 to 0.92 dl/g, a glass transition temperature of −4°c and a melting point of 78°C.

## Comparative Example 1

Preparation of the aluminium compound

A 200-ml round-bottomed flask fitted with nitrogen gas inlet tubing, stirrer and condenser was charged with 50 ml of hexylene glycol, followed by addition of 10 g of powdery aluminium isopropoxide. The temperature was increased to 120°C to distill off isopropyl alcohol and dissolve the aluminium isopropoxide. The above procedure yielded an aluminium compound solution.

Polymerization

A polymerization vessel similar to that used in Example 1 was charged with 100 g of dimethyl terephthalate, 68 g of ethylene glycol and 40 mg of zinc acetate, and the transesterification reaction was conducted in a nitrogen gas stream at 200°C for 3 hours. Then, 0.025 ml of tributyl phosphate and 40 mg of antimony trioxide were added, and the above aluminium compound solution was added so that 0.52 mole of aluminium was available for reaction per 100 moles of dimethyl terephthalate. The reaction system was increased to 260°C and, under gradual decompression, to 280°C. Then, at a reduced pressure of about 0.1 mmHg (13 Pa) the polymerization reaction was carried out for 90 minutes. At 60 minutes of polymerization, the polymer began to stick to the stirring rod, so that stirring was difficult in the later stages of the polymerization reaction. The polyester thus obtained was light-yellow and included a large amount of granular insoluble gels.

## Comparative Example 2

Preparation of the aluminium compound

Using the same reaction vessel as that used for preparation of aluminium compound in Comparative Example 1, 0.1 mole of *p*-hydroxybenzoic acid was dissolved in 50 ml of hexylene glycol, followed by addition of 0.05 mole of aluminium isopropoxide. The mixture was reacted under heating at 100°C to give a transparent aluminium compound solution.

Polymerization

The same polymerization procedure as that described in Comparative Example 1 was followed except that the above-prepared aluminium compound solution instead of the aluminium compound solution used in Comparative Example 1 was added in an amount giving 0.52 mole of aluminium per 100 moles of dimethyl terephthalate. At 60 minutes of polymerization, the polymer began to stick around the stirring rod as had occurred in Comparative Example 1, rendering the stirring difficult. The resulting polyester was pale-yellow and included a large number of large insoluble gel grains.

## Comparative Example 3

Preparation of the aluminium compound

The same reaction vessel as that used in Comparative Example 1 was charged with 50 ml of xylene and 0.05 mole of aluminium isopropoxide, and the mixture was heated at 100°c to dissolve the latter. Then, 0.05 mole of acetylacetone was added and reacted for 15 minutes to give a light-brown transparent aluminium compound solution.

Polymerization

The same polymerization procedure as that described in Comparative Example 1 was followed except that the above aluminium compound solution instead of the aluminium compound solution of Comparative Example 1 was added in an amount giving 0.2 mole of aluminium per 100 moles of dimethyl terephthalate. The polymerization time was 90 minutes. The sticking of the polymer around the stirring rod was observed again in a later stage of polymerization. The resulting polyester was light-yellow and included insoluble gel-like particles.

Comparative Example 4

Preparation of the aluminium compound

The same reaction vessel as that used in Comparative Example 1 was charged with 50 ml of xylene and 0.05 mole of aluminium isopropxodie and the latter was dissolved at room temperature. Then 0.05 mole of acetylacetone was added and the mixture was stirred at a temperature of 50°C for 30 minutes. Then, 0.10 mole of acetic acid was added and the reaction was further conducted at 50°C for 30 minutes. The temperature was increased to 120°C to distill off the isopropyl alcohol, giving an aluminium compound solution.

Polymerization

The same polymerization procedure as that described in Comparative Example 1 was followed except that the above aluminium compound solution instead of the one prepared in Comparative Example 1 was added in an amount giving 0.52 mole of aluminium per 100 moles of dimethyl terephthalate. At 60 minutes of polymerization, the polymer began to stick tenaciously to the stirring rod so that the polymerization reaction was terminated. The resulting polyester was light-yellow and included insoluble gel particles.

Comparative Example 5

The same transesterification and polymerization procedures as in Example 11 were followed except that the amount of aluminium compound was 6.0 mole % based on the combined amount of dicarboxylic acid diesters. The system ceased to flow and gelled in the course of polymerization.

Comparative Example 6

The same transesterification procedure as in Example 2 was followed except that methyl benzoate was used in an amount of 6.0 g, followed by polymerization at 280°C and 0.1 mmHg (13 Pa) for 120 minutes. The resulting polyester was brittle, having an intrinsic viscosity of 0.42 dl/g.

Example 12

The polyesters obtained in Examples 7 and 8 were each formed at 180°C into a layer about 0.1 mm thick on a biaxially oriented polyethylene terephthalte film 0.1 mm thick. Further, a 0.1-mm thick EVA copolymer film (ethylene content: 30 mole percent) was placed on the polyester layer and the whole was heated at 180°C under a pressure of 10 $kg/cm^2$ (1 MPa) for 2 minutes and then quenched to give a three-layered film. From this film, 15-mm-wide specimens were cut off and subjected to a T peeling test at room temperature using a tensile tester (pulling velocity: 200 mm/minute). As a control for each polyester, a three-layered film was prepared using the corresponding polyester produced without the addition of the aluminium compound as the interposing layer and tested for T-peeling strength. The results thus obtained are summarized in Table 2.

TABLE 2

| Polyester | Amount of Al compound added (mole % on dicarboxylic acid component basis) | T-peeling strength (kg/cm) |
|---|---|---|
| Example 7 | 0.5 | 1.97 |
| Control | 0 | 0.03 |
| Example 8 | 0.5 | 2.50 |
| Control | 0 | 0.30 |

Example 13

The polyesters obtained in Examples 10 and 11(a)-(i) were each formed into a quenched film about 0.1 mm thick using a hot press and then interposed between an EVA copolymer film (ethylene content: 45 mole %) 0.1 mm thick and a polyethylene terephthalate film 0.1 mm thick. The whole was pressed at 10 kg/

$cm^2$ (1 MPa) at 180°C and then maintained at 280°C in an almost load-free condition for 2 hours so as to cause melt fusion, followed by quenching by lightly pressing by means of a cooling press. From the thus-obtained three-layered film, 15-mm-wide specimens were cut off and subjected to a T peel test at room temperature and a pulling velocity of 20 mm/minute. As a control for the case in which the polyester of Example 11 was used, a three-layered film prepared in the same manner except that a polyester produced by using the aluminium compound in an amount of 0.05 mole % on the dicarboxylic acid component basis was used in place of the polyester of the invention was also tested for T-peeling strength. The results thus obtained are summarized in Table 3.

TABLE 3

| Polyester | Amount of Al compound added (mole % on dicarboxylic acid component basis) | T-peeling strength (kg/cm) |
|---|---|---|
| Example 10 | 0.5 | >2.0 (for each) |
| Example 11(a) | 0.1 | 0.8 |
| Example 11(b) | 0.2 | 1.2 |
| Example 11(c) | 0.3 | 1.6 |
| Example 11(d) | 0.4 | 2.0 |
| Example 11(e) | 0.6 | 2.2 |
| Example 11(f) | 0.8 | 2.3 |
| Example 11(g) | 1.0 | 2.2 |
| Example 11(h) | 2.0 | 2.4 |
| Example 11(i) | 4.0 | 2.1 |
| Control for Example 11 | 0.05 | 0.2 |

It is seen that those polyester species produced by reacting not less than 0.1 mole % of the aluminium compound with the dicarboxylic acid components were much higher in adhesivity as compared with the polyester produced by using less than 0.1 mole % of the aluminium compound.

Comparative Example 7

Following the procedure of Example 13 except that various carboxylic acid-modified polyolefin adhesives specified in Table 4 were used in place of the polyester of the invention used in Example 13, there were prepared three-layered films having the construction "polyethylene terephthalate/carboxylic acid-modified polyolefin adhesive/ethylene-vinyl alcohol copolymer". These films were tested for peeling strength in the same manner as in Example 13. The results obtained are shown in Table 4. The table 4 also includes the exothermic degradation initiation temperatures of the carboxylic acid-modified polyolefin adhesives as measured on a differential thermal analyzer (DTA) in air (rate of temperature rise: 10°C/minute).

TABLE 4

| Carboxylic acid-modified polyolefin adhesive | Exothermic degradation initiation temperature (°C) | Peeling strength (kg/cm) |
|---|---|---|
| Carboxylic acid-modified polyethylene (1) | 212 | 0.16 |
| Carboxylic acid-modified polyethylene (2) | 237 | 0.12 |
| Carboxylic acid-modified ethylene-propylene copolymer (3) | 224 | 0.01 |
| Carboxylic acid-modified ethylene-vinyl acetate copolymer (4) | 218 | 0.23 |
| Carboxylic acid-modified ethylene-vinyl acetate copolymer (5) | 220 | 0.71 |
| Carboxylic acid-modified ethylene-vinyl acetate copolymer (6) | 214 | 0.49 |
| Carboxylic acid-modified ethylene-vinyl acetate copolymer (7) | 206 | 0.01 |

Notes: (1) Trademark ADMER LF500 (Mitsui Petrochemical Industries, Ltd.)
(2) Trademark ADMER NF500 (Mitsui Petrochemical Industries, Ltd.)
(3) Trademark ADMER QF500 (Mitsui Petrochemical Industries, Ltd.)
(4) Trademark MODIC E200H (Mitsubishi Petrochemical Company, Ltd.)
(5) Trademark MODIC E300K (Mitsubishi Petrochemical company, Ltd.)
(6) Trademark CXA 1025 (E. I. du Pont de Nemours & Co.)
(7) Trademark CXA 3095 (E. I. du Pont de Nemours & Co.).

From the above results, it is understood that conventional adhesives cannot laminate polyethylene terephthalate and EVA copolymer firmly. Since the conventional adhesives have a decomposition temperature lower than the moulding temperature for polyethylene terephthalate (about 280°C), it is also understandable that they can hardly be coextruded in a stable state with polyethylene terephthalate.

Example 14

A 200-ml three-necked flask was charged with 100 g of dimethyl terephthalate, 67 g of ethylene glycol and 40 mg of zinc acetate and then was fitted with a stirrer, a nitrogen gas inlet tube and a condenser. The contents were heated at 200°C for 180 minutes so as to effect the transesterification. Thereafter, 49 mg of tributyl phosphate and 40 mg of antimony trioxide were added, the temperature was raised to 240°C and the excess of ethylene glycol was distilled off by reducing the pressure gradually. The flask was again filled with nitrogen gas and then a dispersion of 0.6 g of the aluminium compound prepared in Example 9 in 5 ml of 1,4-butanediol was added portionwise. After completion of the addition, stirring was continued at 240°c for 10 minutes, then the temperature was raised to 280°C and thereafter the pressure was reduced gradually and the polycondensation was allowed to advance for 120 minutes under reduced pressure of 0.2 mmHg (26 Pa). The thus-obtained polyester was transparent and almost colourless in the molten state. It had an intrinsic viscosity of 0.72 dl/g, a glass transition temperature of 74°C and a melting point of 252°C.

Example 15

Following the procedure of Example 14 but using, as the dicarboxylic acid components, 38.8 g of dimethyl terephthalate and 69 g of dimethyl sebacate and, as the diol component, 55 g of ethylene glycol and 18 g of 1,4-butanediol, together with a suspension of the aluminium compound prepared in Example 9

in 10 ml of 1,4-butanediol, transesterification and polymerization were carried out, the polymerization temperature being 270°C. The thus-obtained polyester was at first slightly yellow and transparent. Upon standing at room temperature, it began to become cloudy. This indicated partial crystallization. It had an intrinsic viscosity of 0.82 dl/g, a glass transition temperature of −1°C and a melting point of 104°C.

Example 16

Using 56.3 g of dimethyl terephthalate, 7.8 g of dimethyl isophthalate and 39.1 g of dimethyl sebacate as the dicarboxylic acid components, and 59.3 g of ethylene glcyol and 12.9 g of 1,4-butanediol as the diol components, the transesterification and polymerization were carried out in the same manner as in Example 15. The polyester obtained was slightly yellow and transparent but, upon standing at room temperature, became cloudy, which was indicative of partial crystallization. It had an intrinsic viscosity of 0.77 dl/g, a glass transition temperature of 2°c and a melting point of 86°C.

Example 17

Using the polyesters obtained in Examples 14, 15 and 16 and following the procedure of Example 13, three-layered films having the construction polyethylene terephthalate/polyester obtained in Examples 14, 15 or 16, respectively/EVA copolymer (ethylene content: 30 mole %) were produced and subjected to a T peel test.

Furthermore, rectangular specimens, 15 mm wide and 80 mm long, were cut off from the above three-layered films and uniaxially stretched about 3.3 times at a stretching temperature of 90°C and a stretching speed of 300%/minute. The thus-oriented films were also subjected to T peel testing in the same manner. The evaluation results with respect to adhesivity and stretchability are shown in Table 5.

TABLE 5

| Polyester | Glass transition temperature | Melting point | T peeling strength (before stretching) (kg/cm) | Stretchability (at 90°C) | T peeling strength (after stretching) (kg/cm) |
|---|---|---|---|---|---|
| Example 14 | 74 | 252 | 0.4 | Good | 0.1 |
| Example 15 | −1 | 104 | 1.2 | Costretching impossible (interlayer separation) | |
| Example 16 | 2 | 86 | 2.0 | Good | 1.2 |

Note: when the laminated sheet comprising the polyester of Example 15 was costretched at 110°C, its stretchability was good and the T peeling strength remained at a high level.

The results shown in Table 5 indicate that when the polyester of the invention is to be used as an adhesive, it is desirably that the glass transition temperature is not higher than 30°C and that when the laminates obtained by using such adhesive are to be costretched, the melting point of the polyester of the invention should desirably be lower than the stretching temperature. If these requirements are met, the stretchability will be good and the peeling strength after stretching will retain a high value.

Example 18

The transesterification vessel of a polyester polymerization apparatus was charged with 23.2 kg of dimethyl terephthalate, 3.2 kg of dimethyl isophthalate, 16.2 kg of dimethyl sebacate, 5.5 kg of 1,4-butanediol, 25.6 kg of ethylene glycol, 49.7 g of trimethylolpropane and 12 g of zinc acetate. The content were heated at 200—235°C for 210 minutes so as to drive the transesterification reaction to completion. The reaction mixture was fed to a polymerization vessel preheated to 240°c. 18.8 g of triphenyl phosphate and 28 g of antimony trioxide were added, and the pressure within the polymerization vessel was gradually reduced to 20 mmHg (2.6 kPa) so as to distil off the excess of glycols. Then, the vessel was filled with nitrogen gas, a dispersion of 240 g of the same aluminium compound as prepared in Example 9 in 4 litres of 1,4-butanediol was added, the whole mixture was stirred for 10 minutes, the temperature was raised to 260°c and the pressure was gradually reduced to below 0.1 mmHg (13 Pa) so as to advance the polycondensation. By adjusting the polymerization period within the range of up to 150 minutes, the four polymers shown in Table 6 were obtained. Each polymer was extruded to a strand-like form and pelletized using a pelletizer, followed by drying at 80°C for 24 hours. The pellets thus obtained weighed about 30 kg. The intrinsic viscosity of the four polyesters are shown in Table 6.

Among the polyesters shown in Table 6, that one having the intrinsic viscosity of 1.10 dl/g

(polymerization period: 150 minutes) had an apparent melt viscosity of 3,500 poises (350 Pa.s) as determined on a Koka flow tester (Shimadzu Corporation) at a temperature of 260°C and a shear rate of $10^2$ $sec^{-1}$, a glass transition temperature of 1°C and a melting point of 86°C. In the molten state, it was transparent. The FT—IR spectrum of this polyester is shown in Fig. 6.

Using the four polyesters each as an interposing layer, three-layered laminate sheets were produced. Thus, each of the polyesters, a copolymerized polyethylene terephthalate (Eastman Chemical Products Inc.; KODAPAK 9921) and an EVA copolymer (ethylene content: 45 mole %) were fed to the same die (die temperature: 250°C) through three extruders at resin temperatures of 180°C (polyester produced above), 260°C (copolymerized polyethylene terephthalate) and 230°C (EVA copolymer) and coextruded to a three-layered laminate sheet about 0.5 mm thick by multi-manifold coextrusion moulding. The laminated sheet was further stretched 2.5 times uniaxially at 90°C. For each polyester, the state of coextrusion and the T peeling strength of the sheet before stretching and that after stretching (detrmined by the method described in Example 13) are summarized in Table 6.

TABLE 6

| [η] (dl/g) of the polyester | State of coextrusion | T peeling strength of sheet (kg/cm) Before stretching | After stretching |
|---|---|---|---|
| 0.60 | Uneven distribution of the polyester at the sheet edge | — | — |
| 0.75 | almost uniform sheet | 1.8 | 1.0 |
| 0.93 | Uniform sheet | 2.3 | 1.2 |
| 1.10 | " | 2.4 | 1.2 |

From the above results, it may be concluded that for use in lamination by coextrusion, the polyester of the invention should preferably have an intrinsic viscosity of not less than 0.7 dl/g, particularly not less than 0.8 dl/g. It is also seen that the state of coextrusion and the peeling strength of the laminate sheet differ little within the intrinsic viscosity range exceeding 0.8 dl/g.

Using the polyester (A), which had the intrinsic viscosity of 1.10 dl/g, as an adhesive for a copolymerized polyethylene terephthalate (Eastman Chemical Products Inc.; KODAPAK 9921) (B) and an EVA copolymer (ethylene content: 30 mole % (C), a five-layered sheet (total thickness: 1.36 mm) having the construction (B)/(A)/(C)/(A)/(B) was formed by multi-manifold coextrusion moulding. The sheet obtained was found to be a coextruded sheet having a good appearance with the layers laminated each in an almost uniform thickness throughout the whole width (500 mm). The T peeling strength of this sheet was 1.5 kg/cm, and the peeling face was the interface between the polyester of the invention (A) and the EVA copolymer (C). Other adhesion interfaces remained firmly stuck together.

In addition, using the polyester having the intrinsic viscosity of 0.93 dl/g as shown in Table 6, a five-layered sheet having the construction polyethylene terephthalate/polyester of the invention/EVA copolymer (ethylene content: 45 mole %)/polyester of the invention/polyethylene terephthalate was produced in the same manner as in Example 13. The T peeling strength of this sheet, when measured in the same manner as in Example 13, was 2.8 kg/cm. This sheet was allowed to stand under conditions of 25°C and 70% RH for 2 months and then the T peeling strength was measured and found to be 2.6 kg/cm. The peeling strength thus decreased little with time.

Example 19

The transesterification vessel of a polyester polymerization apparatus was charged with a dispersion of 1.24 l of colloidal silica (Nissan Chemical Industries, Ltd.; SNOWTEX—20L) in 23.09 kg of ethylene glycol, 23.92 kg of dimethyl terephthalate, 2.06 kg of dimethyl isophthalate, 12.58 kg of dimethyl adipate, 10.93 kg of diethylene glycol, 33.1 g of trimethylolpropane and 40 g of calcium acetate. The contents were heated at 200—235°C for 210 minutes so as to drive the transesterification reaction to completion. The reaction mixture was fed to a polymerization vessel preheated to 240°C. 18.8 g of triphenyl phosphate and 28 g of antimony trioxide were added and the pressure within the polymerization vessel was gradually reduced to 20 mmHg (2.6 kPa) so as to distill off the excess of glycols. Then the vessel was filled with nitrogen gas, a dispersion of 240 g of the same aluminium compound as prepared in Example 9 in 2 litres of 1,4-butanediol and 2 litres of diethylene glycol was added, the whole mixture was stirred for 10 minutes, the temperature was raised to 260°C and the pressure was gradually reduced to below 0.1 mmHg (13 Pa), at which pressure the polymerization reaction was conducted for 150 minutes. The resulting polymer was extruded to a

strand-like form and pelletized using a pelletizer, followed by drying at 80°C for 24 hours. The pellets thus obtained weighed about 30 kg. The intrinsic viscosity of this polyester was 1.10 dl/g. In the molten state, this polymer was slightly cloudy, owing to the colloidal silica. It had a glass transition temperature of 3°C and a melting point of 103°C.

Using this polyester (A) as an adhesive for a copolymerized polyethylene terephthalate (Eastman Chemical Products Inc.; KODAPAK 9921) (B) and an EVA copolymer (ethylene content: 30 mole %) (C), a five-layered tube having he construction (B)/(A)/(C)/(A)/(B) was coextrusion-moulded. One end of this tube was closed by fusion to give a closed-end parison, which was heated at 105°C and stretch-blow moulded. The thus-obtained five-layered hollow vessel had good mechanical strength, shock resistance, water resistance and gas barrier function as well as good transparency without interlayer separation, and was very suited for use as a container for drinks.

Example 20

The transesterification vessel of a polyester polymerization apparatus was charged with 24.8 kg of dimethyl terephthalate, 1.2 kg of dimethyl isophthalate, 12.6 kg of dimethyl adipate, 25.5 kg of ethylene glycol, 4.9 kg of 1,6-hexanediol, 0.050 kg of pentaerythritol and 33 g of calcium acetate and the transesterification reaction was driven to completion by heating the content at 200—235°C for 210 minutes. 0.090 kg of benzoic acid was added and the whole mixture was fed to a polymerization vessel preheated at 240°C. A solution of 16.4 g of phosphoric acid (85% pure) was added and further 16.5 g of antimony trioxide was added. The pressure within the polymerization vessel was gradually reduced to 20 mmHg (2.6 kPa) so as to distill off the excess of glycols. Thereafter, 240 g of the same aluminium compound as prepared in Example 9 was added and the polycondensation was allowed to proceed for 150 minutes. The polyester produced was collected in the form of pellets. It had an intrinsic viscosity of 1.25 dl/g and was transparent in the molten state.

Example 21

A 200-ml three-necked flask provided with nitrogen gas inlet tube, stirrer, condenser and heating device was charged with 63.11 g of dimethyl terephthalate, 40.30 g of dimethyl sebacate, 55.40 g of ethylene glycol, 8.85 g of 1,6-hexanediol and 0.04 g of zinc acetate. The contents were heated in a nitrogen gas atmosphere at 200°C for 3 hours, while the byproduct methanol was distilled off. Then, 0.17 g of trimellitic anhydride was added, the mixture was stirred for 20 minutes, then 25 mg of tributyl phosphate, 40 mg of antimony trioxide and a dispersion of 0.60 g of the aluminium compound synthesized in Example 9 in a small amount of 1,4-butanediol were added gradually so as to allow dissolution, the temperature was then raised to 260°C and the pressure was reduced gradually while gradually raising the temperature. In this manner, the polymerization was effected under a reduced pressure of 0.1 mmHg (13 Pa) at 280°C for 90 minutes. The polyester thus obtained was transparent in the molten state and had an intrinsic viscosity of 1.05 dl/g.

Example 22

The polyesters obtained in Example 1—5 and an ordinary, aluminium-free polyethylene terephthalate of intrinsic viscosity = 0.70 dl/g (for comparison) were each formed to a quenched film about 0.2 mm thick using a hot press. Separately, a carboxylic-acid-modified polyethylene and a carboxylic-acid-modified EVA copolymer, each in a chip form, were sufficiently dried and were each moulded to a quenched film about 0.2 mm thick. The polyester film and the carboxylic-acid-modified polyethylene film or carboxylic acid-modified EVA copolymer film were placed one over another, pressed together at 180°C under a pressure of 10 kg/cm$^2$ (1 MPa), then maintained in an almost load-free condition at 280°C for 2 minutes so as to cause melt fusion, and finally quenched by lightly pressing by a cooling press. From the laminate sheet thus obtained, rectangular test specimens, 15 mm wide, were cut off, allowed to stand at room temperature overnight and then subjected to a T peeling test at a pulling speed of 20 mm/minute. The results obtained are shown in Table 7.

TABLE 7

| Polyester | T peeling strength (g/cm) Carboxylic acid-modified ethylenevinyl acetate copolymer[1] | Carboxylic acid-modified polyethylene[2] |
|---|---|---|
| Example 1 | >2170[3] | >2130[3] |
| Example 2 | >2000[3] | >2000[3] |
| Example 3 | >2170[3] | >2130[3] |
| Example 4 | >2230[3] | >2030[3] |
| Example 5 | >2050[3] | >2150[3] |
| Polyethylene terephthalate (Comparative) Example | 220 | 480 |

Notes: 1) Trademark CXA 1025 (E.I. du Pont de Nemours & Co.)
2) Trademark ADMER NF500 (Mitsui Petrochemical Industries, Ltd.)
3) The carboxylic acid-modified polymer layer was fractured, so that such value was calculated on the basis of the load at breakage.

Example 23

Using several quenched films 0.1 mm thick made of different carboxylic acid-modified polyolefins (G) and a quenched film 0.1 mm thick made of an EVA copolymer (ethylene content: 45 mole %) (H), three-layered quenched films having the construction (G)/(H)/(G) were produced in the same manner as in Example 22. Furthermore, by repeating the procedure of Example 22, a sheet (F) 0.3 mm thick and made of the polyester obtained in Example 14 or of polyethylene terephthalate (control) was laminated to both sides of such three-layered films. There were thus produced three-component five-layered sheets having the construction (F)/(G)/(H)/(G)/(F). They were subjected to a T peeling test in the same manner as in Example 22. The results obtained are shown in Table 8.

TABLE 8

| Polyester (F) | Carboxylic acid-modified polyolefin (G) | Interface where peeling occurred | T peeling strength (kg/cm) |
|---|---|---|---|
| Example 14 | Carboxylic-acid-modified polyethylene (1) | (F)/(G) | 0.82 |
| Example 14 | Carboxylic-acid-modified ethylene-vinyl-acetate copolymer (2) | (H)/(G) | 0.89 |
| Example 14 | Carboxylic-acid-modified ethylene-vinyl-acetate copolymer (3) | (F)/(G) | 0.80 |
| Polyethylene terephthalate (Control Example) | Carboxylic-acid-modified polyethylene (1) | (F)/(G) | 0.12 |

Notes: (1) Trademark ADMER NF500 (Mitsui Petrochemical Industries, Ltd.)
(2) Trademark CXA 1025 (E. I. du Pont de Nemours & Co.)
(3) Trademark MODIC E300K (Mitsubishi Petrochemical Company, Ltd.)

**Claims**

1. A thermoplatic polyester comprising the constituent units represented by the following formulae (I), (II), (III) and (IV):

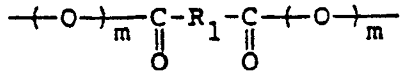
(I)

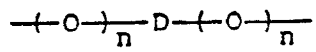
(II)

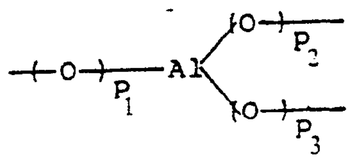
(III)

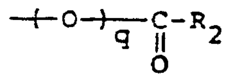
(IV)

where $R_1$, in its repeated occurrence in the polyester, represents one or more bivalent groups each derived by removal of both carboxyl groups from terephthalic acid, isophthalic acid, orthophthalic acid or a straight-chained $C_{4-10}$ aliphatic dicarboxylic acid; $R_2$, in its repeated occurrence in the polyester, represents one or more univalent groups derived by removal of the carboxyl group from, a $C_{6-30}$ aliphatic or alicyclic monocarboxylic acid or $C_{7-20}$ aromatic monocarboxylic acid; D, in its repeated occurrence in the polyester, represents one or more bivalent groups each derived by removal of both hydroxyl groups from a $C_{2-10}$ aliphatic diol or a $C_{6-8}$ alicyclic diol; and each of $m$, $n$, $p_1$, $p_2$, $p_3$ and $q$ is 0 or 1, the constituent residues being bonded together in the combinations (I)-(II), (I)-(III), (II)-(III), (II)-(IV), (III)-(III) and (III)-(IV) and via only one oxygen atom in each combination, the molar ratio (I):(II) being substantially 1:1, the molar ratio (I):(III) being in the range 1,000:1 to 100:5 and the molar ratio (III):(IV) being in the range 4:1 to 1:10, the polyester having an intrinsice viscosity of not less than 0.5 dl/g.

2. A polyester as claimed in Claim 1 that, in addition to the constituent units (I), (II), (III) and (IV), further comprises at least one of the multivalent residues represented by the following formulae (V), (VI), (VII) and (VIII):

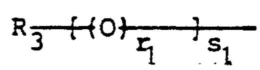
(V)

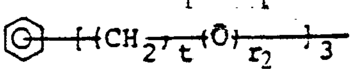
(VI)

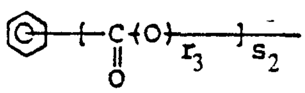
(VII)

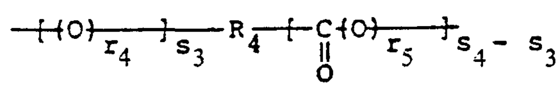
(VIII)

where each of $s_1$, $s_2$ and $s_4$ is 3 or 4, $s_3$ is an integer of from 1 to $s_4$-l, $R_3$ is an aliphatic organic residue containing 3 to 9 carbon atoms and having a valency of $s_1$, $R_4$ is an aliphatic organic residue containing 2 to 4 carbon atoms and having a valency of $s_4$, the valency of the benzene nucleus in (Vi) is 3, the valency of the benzene nucleus in (VII) is $s_2$, $t_2$ is 1, 2, 3 or 4, each of $r_1$, $r_2$, $r_3$, $r_4$ and $r_5$ is 0 or 1, each free valency of the constituent units (V) and (VI) being bonded to a (I), (III), (IV), (VII) or (VIII) unit, each free valency of the constituent unit (VII) being bonded to a (II), (III), (V), (VI) or (VIII) unit, and each free valency of the constituent unit (VIII) being bonded to any of units (I) to (VIII), each bonding between two constituent units being made via only one oxygen atom, the molar ratio (I):(V)+(VI)+(VII)+(VIII) being in the range 100:0 to 100:1 and the content of (IV) being the sum of a content corresponding to the molar ratio of (III):(IV), which is 4:1 to 1:10, and a content corresponding to a molar ratio of (IV):(V)+(VI)+(VII)+(VIII) in the range of 0:1 to 15:1, the polyester having an intrinsic viscosity of not less than 0.7 dl/g.

3. A method of producing a polyester as claimed in Claim 1 comprising polycondensing at least one of terephthalic acid, isophthalic acid, orthophthalic acid and a straight-chained $C_{4-10}$ aliphatic dicarboxylic acid or an ester-forming derivative of such an acid with at least one $C_{2-10}$ aliphatic diol and/or $C_{6-8}$ alicyclic diol in the presence of an aluminium compound of the formula

$$Al(O{-}R_5)_i(OCO{-}R_6)_jO{-}\underset{\underset{R_7}{|}}{C}{=}CH{-}CO{-}R_8)_k$$

where $R_5$ is a univalent group derived from an aliphatic, alicyclic or monocyclic aromatic alcohol by removal of the hydroxyl group, $R_6$ is a monovalent group derived from a $C_{1-30}$ aliphatic monocarboxylic acid, a $C_{6-30}$ alicyclic monocarboxylic acid, a $C_{7-20}$ aromatic monocarboxylic acid, or a monoester of a mono(alkali metal) salt of a dicarboxylic acid corresponding to any of the said monocarboxylic acids by removal of the free carboxyl group, $R_7$ is a methyl or phenyl group, $R_8$ is a methyl or phenyl group or a univalent group derived from an aliphatic alcohol by removal of the hydroxyl proton and *i*, *j* and *k* represent the average number of respective groups bonded to the aluminium atom, where $i+j+k=3$, *i* is not greater than 2 and each of *j* and *k* is not greater than 3.

4. A method as claimed in Claim 3, in which the dicarboxylic acid or acids, each in ester form, and the diol or diols are transesterified and, thereafter, the aluminium compound is added and the polycondensation carried out.

5. A method as claimed in Claim 3, in which, in the aluminium compound, j is not 0, $R_6$ is a univalent group derived from $C_{6-30}$ aliphatic or alicyclic monocarboxylic acid or a $C_{7-20}$ aromatic monocarboxylic acid by removal of the carboxyl group, and the $—OR_5$ and $—O—C(R_7)=CH—CO—R_8$ groups in the aluminium compound are substantially completely eliminated from the reaction system during the polycondensation reaction, whereby the $—OCOR_6$ group alone is allowed to be inserted into the polyester as the constituent unit (IV).

6. A method as claimed in Claim 5, in which, in the aluminium compound, $R_6$ is a phenyl group.

7. A method as claimed in Claim 5, in which, in the aluminium compound, $R_6$ in its repeated or single occurrence represents a straight-chain $C_{5-17}$ alkyl group and/or a *p*-hydroxyphenyl group.

8. A method as claimed in Claim 3, in which, in the aluminium compound, (A) j is not 0, and $R_6$ is a univalent group derived from a $C_{1-5}$ aliphatic monocarboxylic acid by removal of the carboxyl group or (B) j=0, and in which one or more monocarboxylic acids that are $C_{6-30}$ aliphatic or alicyclic acids or $C_{7-20}$ aromatic acids, either in the free or esterified form, is/are added to the reaction system, whereby the $—OR_5$, $—OCOR_6$ and $—O—C(R_7)=CH—CO—R_8$ groups in the aluminium compound are substantially completely eliminated from the reaction system during the polycondensation reaction.

9. An adhesive essentially consisting of a thermoplastic polyester as claimed in Claim 1 having a glass transition temperature of not higher than 30°C.

10. A laminate comprising at least three layers, and constructed in such a way that the intermediate layer (A) is made of a thermoplastic polyester as claimed in Claim 1 having a glass transition temperature not higher than 30°C, a layer (B) on one side of layer (A) is made of a polyester 80—100 mole percent of which consists of ethylene terephthalate repeating units and layer (C) on the other side of layer (A) is made of an ethylene-vinyl-alcohol copolymer, the laminate thus comprising the construction (B)/(A)/(C).

11. A laminated hollow vessel comprising at least three layers arranged (B)/(A)/(C) where (A), (B) and (C) are as defined in Claim 10.

12. The laminate as claimed in Claim 10 or a hollow vessel as claimed in Claim 11 having the five-layer construction (B)/(A)/(C)/(A)/(B).

13. A laminate comprising at least two layers whose construction is such that a layer (F) made of a thermoplastic polyester as claimed in Claim 1 and having a glass transition temperature of higher than 30°C and/or if it is crystalline, a melting point of not lower than 120°C, is adjacent to a layer (G) made of a carboxyl-containing polymer, the laminate thus comprising the construction (F)/(G).

14. A laminate as claimed in Claim 13 that further comprises an ethylene-vinyl-alcohol copolymer layer (H) adjacent to layer (G), the laminate thus comprising the construction (F)/(G)/(H).

15. A laminated hollow vessel comprising at least three layers arranged (F)/(G)/(H), where (F), (G) and (H) are as defined in Claims 13 and 14.

## Patentansprüche

1. Thermoplastischer Polyester, enthaltend die Struktureinheiten, die durch die folgenden Formeln (I), (II), (III) und (IV) dargestellt sind:

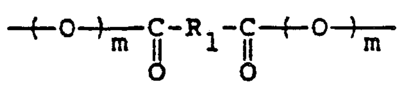

(I)

$$-\!(O)_n\!-D-\!(O)_n\!- \qquad (II)$$

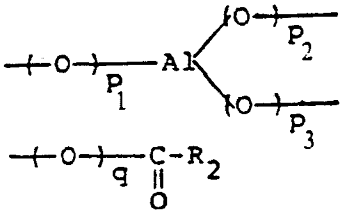

(III)

(IV)

worin $R_1$ in seinem wiederholten Vorkommen in dem Polyester eine oder mehr zweiwertige Gruppe(n), die jeweils durch Abspalten von beiden Carboxylgruppen aus Terephthalsäure, Isophthalsäure, Orthophthalsäure oder einer geradekettigen aliphatischen $C_{4-10}$-Dicarbonsäure abgeleitet sind, $R_2$ in seinem wiederholten Vorkommen in den Polyester eine oder mehr einwertige Gruppe(n), die durch Abspalten der Carboxylgruppe aus einer $C_{6-30}$ aliphatischen oder -alicyclischen Monocarbonsäure oder einer $C_{7-20}$-aromatischen Monocarbonsäure abgeleitet sind, D in seinem wiederholten Vorkommen in dem Polyester eine oder mehr zweiwertige Gruppe(n), die jeweils durch Abspalten von beiden Hydroxylgruppen aus einem $C_{2-10}$-aliphatischen Diol oder einem $C_{6-8}$-alicyclischen Diol abgeleitet sind, bedeuten und jedes der Symbole m, n, $p_1$, $p_2$, $p_3$ und q 0 oder 1 bedeutet, wobei die Reste der Struktureinheiten in den Kombinationen (I)-(II), (I)-(III), (II)-(III), (II)-(IV), (III)-(III) und (III)-(IV) und über nur ein Sauerstoffatom in jeder Kombination aneinander gebunden sind, das Molverhältnis (U):(II) im wesentlichen 1:1, das Molverhältnis (I):(III) im Bereich von 1000:1 bis 1000:5 und das Molverhältnis (III):(IV) im Bereich von 4:1 bis 1:10 ist und der Polyester eine Grenzviskositätszahl von nicht weniger als 0,5 dl/g hat.

2. Polyester nach Anspruch 1, der zusätzlich zu den Struktureinheiten (I), (II), (III) und (IV) außerdem mindestens einen der mehrwertigen Reste enthält, die durch die folgenden Formeln (V), (VI), (VII) und (VIII) dargestellt sind:

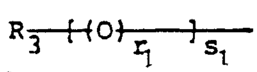

(V)

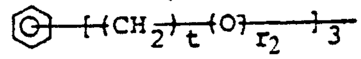

(VI)

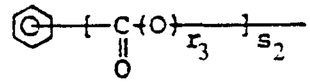

(VII)

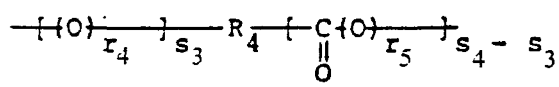

(VIII)

worin jedes der Symbole $s_1$, $s_2$ und $s_4$ 3 oder 4 ist, $s_3$ eine ganze Zahl von 1 bis ($S_4$-1) ist, $R_3$ einen aliphatischen organischen Rest mit 3 bis 9 Kohlenstoffatomen bedeutet, der eine Wertigkeit von $s_1$ hat, $R_4$ einen aliphatischen organischen Rest mit 2 bis 4 Kohlenstoffatomen und mit einer Wertigkeit von $s_4$ bedeutet, wobei die Wertigkeit des Benzolkerns in (VI) 3 ist, die Wertigkeit des Benzolkerns in (VII) $s_2$ ist, t für 1, 2, 3 oder 4 steht, jedes der Symbole $r_1$, $r_2$, $r_3$, $r_4$ und $r_5$ 0 oder 1 ist, jede freie Valenz der Struktureinheiten (V) und (VI) an eine Einheit (I), (III), (IV), (VII) oder (VIII) gebunden ist, jede freie Valenz der Struktureinheit (VII) an eine Einheit (II), (III), (V), (VI) oder (VIII) gebunden ist und jede freie Valenz der Struktureinheit (VIII) an irgendeine der Einheiten (I) bis (VIII) gebunden ist, wobei jede Verknüpfung zwischen zwei Struktureinheiten über nur ein Sauerstoffatom erfolgt, das Molverhältnis (I):(V) + (VI) + (VII) + (VIII) im Bereich von 100:0 bis 100:1 liegt und der Anteil an (IV) die Summe eines Anteils entsprechend dem Molverhältnis von (III):(IV), welches 4:1 bis 1:10 ist, und eines Anteils entsprechend einem Molverhältnis von (IV):(V) + (VI) + (VII) + (VIII) im Bereich von 0:1 bis 15:1 ist und wobei der Polyester eine Grenzviskositätszahl von nicht weniger als 0,7 dl/g hat.

3. Verfahren zur Herstellung eines Polyesters gemäß Anspruch 1, bei dem mindestens eine Verbindung aus der Gruppe Terephthalsäure, Isophthalsäure, Orthophthalsäure und geradekettige $C_{4-10}$-aliphatische Dicarbonsäuren oder ein esterbildendes Derivat einer solchen Säure mit mindestens einem $C_{2-10}$-aliphatischen Diol und/oder $C_{6-8}$-alicyclischen Diol in Gegenwart einer Aluminiumverbindung der Formel

$$Al(O{-}R_5)_i(OCO{-}R_6)_j(O{-}\underset{\displaystyle R_7}{\underset{|}{C}}{=}CH{-}CO{-}R_8)_k$$

polykondensiert wird, wobei $R_5$ eine einwertige Gruppe, die von einem aliphatischen, alicyclischen oder monocyclischen aromatischen Alkhol durch Abspalten der Hydroxylgruppe abgeleitet ist, $R_6$ ein einwertige Gruppe, die von einer $C_{1-30}$-aliphatischen Monocarbonsäure, einer $C_{6-30}$-alicyclischen Monocarbonsäure, einer $C_{7-20}$-aromatischen Monocarbonsäure oder einem Monoester eines Mono(alkalimetall)-Salzes einer Dicarbonsäure entsprechend einer der vorstehend genannten Monocarbonsäuren durch Abspalten der freien Carboxylgruppe abgeleitet ist, $R_7$ eine Methyl- oder Phenylgruppe, $R_8$ eine Methyl- oder Phenylgruppe oder eine einwertige Gruppe, die von einem aliphatischen Alkohol durch Abspalten des

Hydroxyl-Protons abgeleitet ist, bedeuten und i, j und k die Durchschnittszahl der jeweiligen, an das Aluminiumatom gebundenen Gruppen darstellen, wobei i + j + k = 3, i nicht größer als 2 ist und jedes der Symbole j und k night größer als 3 ist.

4. Verfahren nach Anspruch 3, bei dem die Dicarbonsäure oder -säuren jeweils in Form des Esters und das Diol oder die Diole einer Umesterung unterworfen werden und danach die Aluminiumverbindung zugesetzt und die Polykondensation durchgeführt wird.

5. Verfahren nach Anspruch 3, bei dem in der Aluminiumverbindung j verschieden von 0 ist, $R_6$ eine einwertige Gruppe bedeutet, die von einer $C_{6-30}$-aliphatischen oder alicyclischen Monocarbonsäure oder einer $C_{7-20}$-aromatischen Monocarbonsäure durch Abspalten der Carboxylgruppe abgeleitet ist, und die $-OR_5$ und $-O-C(R_7)=CH-CO-R_8$-Gruppen in der Aluminiumverbindung während der Polykondensationsreaktion im wesentlichen vollständig aus dem Reaktionssystem eliminiert werden, weshabl nur die $-OCOR_6$-Gruppe als Struktureinheit (IV) in den Polyester eingebaut werden kann.

6. Verfahren nach Anspruch 5, bei dem in der Aluminium-verbindung $R_6$ eine Phenylgruppe bedeutet.

7. Verfahren nach Anspruch 5, bei dem in der Aluminiumverbindung $R_6$ in seinem wiederholten oder einfachen Vorkommen eine geradekettige $C_{5-17}$-Alkylgruppe und/oder eine p-Hydroxyphenylgruppe bedeutet.

8. Verfahren nach Anspruch 3, bei dem in der Aluminiumverbindung (A) j verschieden von 0 ist und $R_6$ eine einwertige Gruppe bedeutet, die von einer $C_{1-5}$-aliphatischen Monocarbonsäure durch Abspalten der Carboxylgruppe abgeleitet ist, oder (B) j = 0 und wobei eine Monocarbonsäure oder mehrere Monocarbonsäuren, die $C_{6-30}$-aliphatische oder alicyclische Säuren oder $C_{7-20}$-aromatische Säuren sind, entweder in freier oder veresterter Form dem Reaktionssystem zugesetzt wird bzw. werden, wobei die $-OR_5$, $-OCOR_6$ und $-O-C(R_7)=CH-CO-R_8$-Gruppen in der Aluminiumverbindung während der Polykondensationsreaktion im wesentlichen vollständig aus dem Reaktionssystem eliminiert werden.

9. Klebmittel, bestehend im wesentlichen aus einem thermoplastischen Polyester gemäß Anspruch 1 mit einer Glasübergangstemperatur von nicht mehr als 30°C.

10. Mindestens drei Schichten umfassendes Laminat, das derart aufgebaut ist, daß die Zwischenschicht (A) aus einem thermoplastischen Polyester gemaß Anspruch 1 mit einer Glasübergangstemperatur von nicht mehr als 30°C besteht, eine Schicht (B) auf einer Seite der Schicht (A) aus einem Polyester gebildet ist, der zu 80 bis 100 Mol.-% aus wiederkehrenden Ethylenterephthalat-Einheiten besteht und eine Schicht (C) auf der anderen Seite der Schicht (A) aus einem Ethylen-Vinylalkohol-Copolymeren gebildet ist, wobei das Laminat den Aufbau (B)/(A)/(C) aufweist.

11. Laminiertes Hohlgefäß, welches mindestens drei gemäß (B)/(A)/(C) angeordnete Schichten umfaßt, wobei (A), (B) und (C) dien in Anspruch 10 gegebene Definition haben.

12. Laminat gemäß Anspruch 10 oder Hohlgefäß gemäß Anspruch 11, welches die fünf-Schichten-Struktur (B)/(A)/(C)/('A)/(B) hat.

13. Mindestens zwei Schichten umfassendes Laminat, dessen Aufbau derart ist, daß eine Schicht (F) aus einem thermoplastischen Polyester gemäß Anspruch 1, der eine Glasübergangstemperatur von mehr als 30°C hat, und/oder falls er kristallin ist, einen Schmelzpunkt von nicht weniger als 120°C hat, angrenzend an eine Schicht (G) aus einem Carboxylgruppen enthaltenden Polymeren angeordnet ist, wobei das Laminat den Aufbau (F)/(G) aufweist.

14. Laminat nach Anspruch 13, welches zusätzlich eine Schicht (H) aus einem Ethylen-Vinylalkohol-Copolymeren angrenzend an die Schicht (G) aufweist, wobei das Laminat den Aufbau (F)/(G)/(H) besitzt.

15. Laminiertes Hohlgefäß, das mindestens drei entsprechend (F)/(G)/(H) angeordnete Schichten umfaßt, wobei (F), (G) und (H) die Definition gemäß Anspruch 13 haben.

16. Laminiertes Hohlgefäß nach Anspruch 15 mit der fünf-Schichten-Struktur (F)/(G)/(H)/(G)/(F).

**Revendications**

1. Un polyester thermoplastique comprenant les motifs constitutifs représentés par les formules (I), (II), (III) et (IV) suivantes:

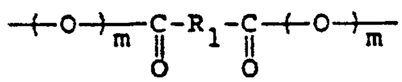

(I)

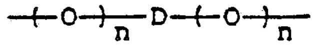

(II)

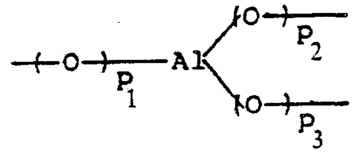

(III)

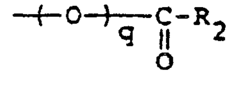

(IV)

où $R_1$, dans sa présence répétée dans le polyester, représente un ou plusieurs groupes bivalents dérivant chacun de l'élimination des deux groupes carboxyles de l'acide téréphtalique, l'acide isophtalique, l'acide orthophtalique ou un acide dicarboxyliqe aliphatique à chaîne droite en $C_{4-10}$; $R_2$, dans sa présence répétée dans le polyester, représente un ou plusieurs groupes univalents dérivant de l'élimination du groupe carboxyle d'un acide monocarboxylique aliphatique ou alicyclique en $C_{6-30}$ ou d'un acide monocarboxylique aromatique en $C_{7-20}$; D, dans sa présence répétée dans le polyester, représente un ou plusieurs groupes bivalents dérivant chacun de l'élimination des deux groupes hydroxyles d'un diol aliphatique en $C_{2-0}$ ou d'un diol alicyclique en $C_{6-8}$; et chacun de m, n, $p_1$, $p_2$, $p_3$ et q est 0 ou 1, les restes constitutifs étant unis ensemble dans les combinaisons (I)-(II), (I)-(III), (II)-(IV), (III)-(III) et (III)-(IV) par l'intermédiaire d'un seul atome d'oxygène dans chaque combinaison, le rapport molaire (I)/(II) étant essentiellement de 1/1, le rapport molaire (I)/(III) étant dans la gamme de 1 000/1 à 100/5 et le rapport molaire (III)/(IV) étant dans la gamme de 4/1 à 1/10, le polyester ayant une viscosité intrinsèque qui n'est pas inférieure à 0,5 dl/g.

2. Un polyester comme revendiqué dans la revendication 1 qui, en plus des motifs constitutifs (I), (II), (III) et (IV), comprend de plus au moins un des restes multivalents représentés par les formules suivantes (V), (VI), (VII) et (VIII)

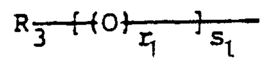 (V)

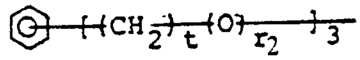 (VI)

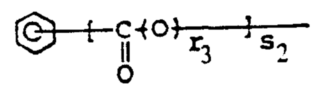 (VII)

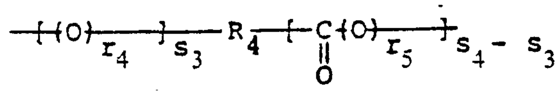 (VIII)

où chacun de $s_1$, $s_2$ et $s_4$ est 3 ou 4, $s_3$ est un entier de 1 à $s_4$-1, $R_3$ est un reste organique aliphatique contenant 3 à 9 atomes de carbone et ayant une valence de $s_1$, $R_4$ est un reste organique aliphatique contenant 2 à 4 atomes de carbone et ayant une valence de $s_4$, la valence du noyau benzène dans (VI) est 3, la valence du noyau benzène dans (VII) est $s_2$, t est 1, 2, 3 ou 4, chacun de $r_1$, $r_2$, $r_3$, $r_4$ et $r_5$ est 0 ou 1, chaque valence libre des motifs constitutifs (V) et (VI) étant unie à un motif (I), (III), (IV), (VII) ou (VIII), chaque valence libre du motif constitutif (VII) étant unie à un motif (II), (III), (V), (VI) ou (VII) et chaque valence libre du motif constitutif (VIII) étant unie à un autre quelconque des motifs (I) à (VIII), chaque liaison entre deux motifs constitutifs étant effectuée uniquement par un atome d'oxygène, le rapport molaire (I)/(V) + (VI) + (VII) + (VIII) étant dans la gamme de 100/0 à 100/1 et la teneur de (IV) étant la somme d'une teneur correspondant au rapport molaire de (III)/(IV) qui est de 4/1 à 1/10 et d'une teneur correspondant à un rapport molaire de (IV)/(V) + (VI) + (VII) + (VIII) dans la gamme de 0/1 à 15/1, le polyester ayant une viscosité intrinsèque qui n'est pas inférieure à 0,7 dl/g.

3. Un procédé de production d'un polyester comme revendiqué dans la revendication 1 comprenant la polycondensation d'au moins un de l'acide téréphtalique, l'acide isophtalique, l'acide orthophtalique et un acide dicarboxylique aliphatique à chaîne droite en $C_{4-10}$ ou d'un dérivé formant un ester d'un tel acide avec au moins un diol aliphatique en $C_{2-10}$ et/ou un diol alicyclique en $C_{6-8}$ en présence d'un composé d'aluminium de formule

$$Al(O{-}R_5)_i(OCO{-}R_6)_jO{-}\underset{\displaystyle R_7}{\underset{|}{C}}{=}CH{-}CO{-}R_8)_k$$

où $R_5$ est un groupe univalent dérivant d'un alcool aliphatique, alicyclique ou aromatique monocyclique par élimination du groupe hydroxyle, $R_6$ est un groupe monovalent dérivant d'un acide monocarboxylique aliphatique en $C_{1-30}$, d'un acide monocarboxylique alicyclique en $C_{6-30}$, d'un acide monocarboxylique aromatique en $C_{7-20}$ ou d'un monoester ou d'un monosel de métal alcalin d'un acide dicarboxylique correspondant aà l'un quelconque desdits acides monocarboxyliques par élimination du groupe carboxyle libre, $R_7$ est un groupe méthyle ou phényle, $R_8$ est un groupe méthyle ou phényle ou un groupe univalent dérivant d'un alcool aliphatique par élimination du proton hydroxylique et i, j et k représentent le nombre moyen des groupes respectifs unis à l'atome d'aluminium, où i + j + k = 3, i n'est pas supérieur à 2 et chacun de j et k n'est pas supérieur à 3.

4. Un procédé comme revendiqué dans la revendication 3 où l'acide ou les acides dicarboxyliques, chacun sous forme d'un ester, et le diol ou les diols sont transestérifiés et ensuite le composé d'aluminium est ajouté et la polycondensation est effectuée.

5. Un procédé comme revendiqué dans la revendication 3 dans lequel, dans le composé d'aluminium, n'est pas 0, $R_6$ est un groupe univalent dérivant d'un acide monocarboxylique aliphatique ou alicyclique en

$C_{6-30}$ ou d'un acide monocarboxylique aromatique en $C_{7-20}$ par élimination du groupe carboxyle et les groupes $—OR_5$ et $—O—C(R_7)=CH—CO—R_8$ du composé d'aluminium sont essentiellement complètement éliminés du système réactionnel pendant la réaction de polycondensation, si bien que seul le groupe $—OCOR_6$ peut être inséré dans le polyester comme motif constitutif (IV).

6. Un procédé comme revendiqué dans la revendication 5 dans lequel, dans le composé d'aluminium, $R_6$ est un groupe phényle.

7. Un procédé comme revendiqué dans la revendication 5 dans lequel, dans le composé d'aluminium, $R_6$, dans sa présence répétée ou unique, représente un groupe alcoyle à chaîne droite en $C_{5-17}$ et/ou un groupe p-hydroxyphényle.

8. Un procédé comme revendiqué dans la revendication 3 dans lequel, dans le composé d'aluminium, (A) j n'est pas 0 et $R_6$ est un groupe univalent dérivé d'un acide monocarboxylique aliphatique en $C_{1-5}$ par élimination du groupe carboxyle ou (B) j = 0, et dans lequel un ou plusieurs acides monocarboxyliques, qui sont des acides aliphatiques ou alicycliques en $C_{6-30}$ ou des acides aromatiques en $C_{7-20}$, soit sous la forme libre soit sous la forme estérifiée est/sont ajouté(s) au système réactionnel, si bien que les groupes $—OR_5$, $—OCOR_6$ et $—O—C(R_7)=CH—CO—R_8$ dans le composé d'aluminium sont essentiellement complètement éliminés du système réactionnel pendant la réaction de polycondensation.

9. Un adhésif constitué essentiellement d'un polyester thermoplastique comme revendiqué dans la revendication 1 ayant une température de transition vitreuse qui n'est pas supérieure à 30°C.

10. Un stratifié comprenant au moins trois couches et constitué de telle sorte que la couche intermédiaire (A) est faite d'un polyester thermoplastique comme revendiqué dans la revendication 1 ayant une température de transition vitreuse qui n'est pas supérieure à 30°C, une couche (B) sur un côté de la couche (A) est faite d'un polyester dont 80 à 100% molaires sont constitués de motifs répétés de téréphtalate d'éthylène et une couche (C) sur l'autre côté de la couche (A) est faite d'un copolymère d'éthylène et d'alcool vinylique, le stratifié comprenant donc la structure (B)/(A)/(C).

11. Un récipient creux stratifié comprenant au moins trois couches de disposition (B)/(A)/(C) où (A), (B) et (C) sont comme défini dans la revendication 10.

12. Le stratifié comme revendiqué dans la revendication 10 ou un récipient creux comme revendiqué dans la revendication 11 ayant la structure à cinq couches (B)/(A)/(C)/(A)/(B).

13. Un stratifié comprenant au moins deux couches dont la structure est telle qu'une couche (F) faite d'un polyester thermoplastique comme revendiqué dans la revendication 1 et ayant une température de transition vitreuse supérieure à 30°C et/ou, s'il est cristallin, un point de fusion qui n'est pas inférieur à 120°C, est adjacente à une couche (G) faite d'un polymère carboxylé, le stratifié comprenant donc la structure (F)/(G).

14. Un stratifié comme revendiqué dans la revendication 13 qui comprend de plus une couche (H) de copolymère d'éthylène et d'alcool vinylique adjacente à la couche (G), le stratifié comprenant donc la structure (F)/(G)/(H).

15. Un récipient creux stratifié comprenant au moins trois couches à disposition (F)/(G)/(H) où (F), (G) et (H) sont comme défini dans les revendications 13 et 14.

16. Un récipient creux stratifié comme revendiqué dans la revendication 15 ayant la structure à cinq couches (F)/(G)/(H)/(G)/(F).

FIG. 1.

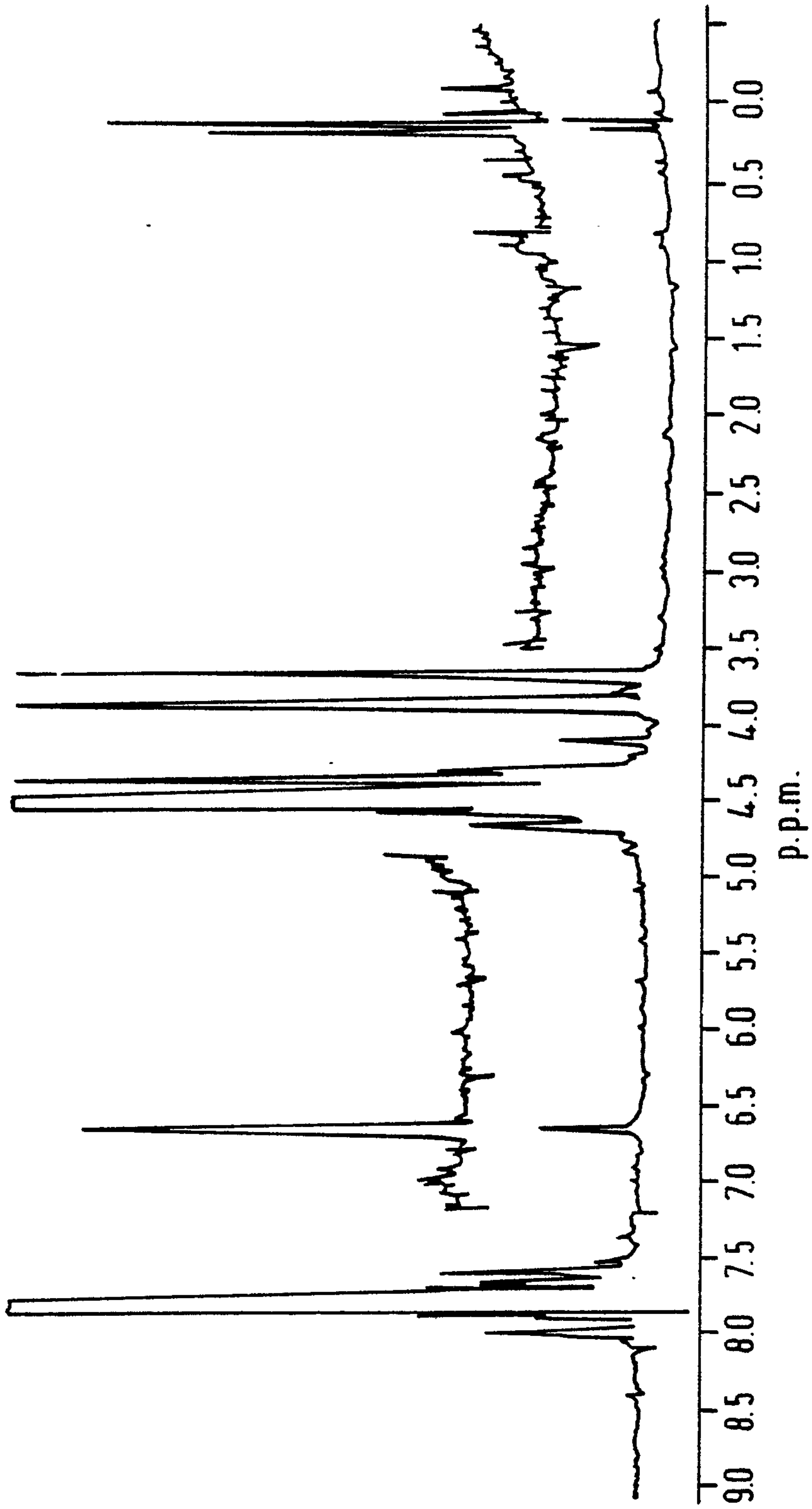

FIG. 2.

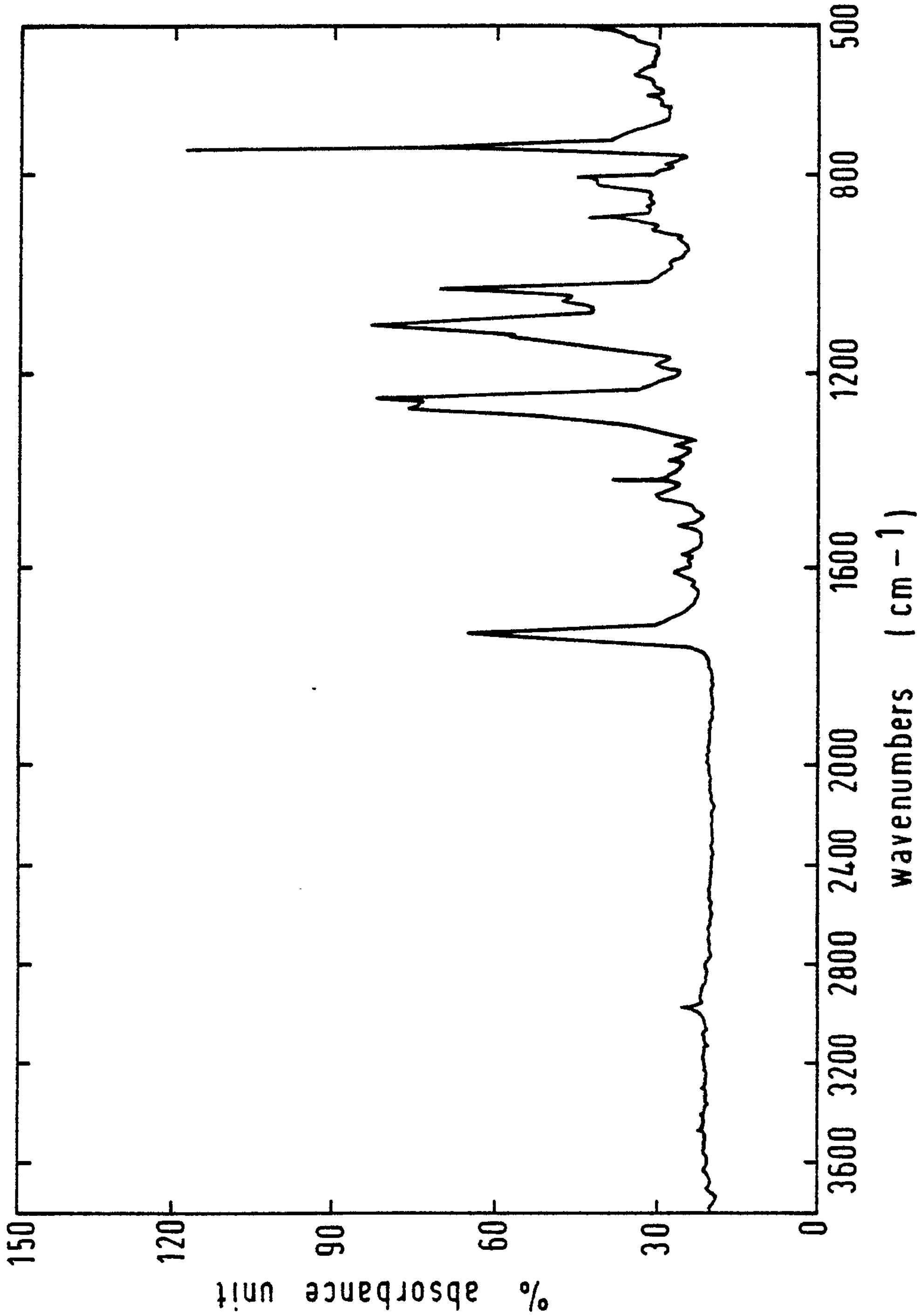
150
120
90
60
30
0
% absorbance unit
3600
3200
2800
2400
2000
1600
1200
800
500
wavenumbers (cm – 1)

FIG. 3.

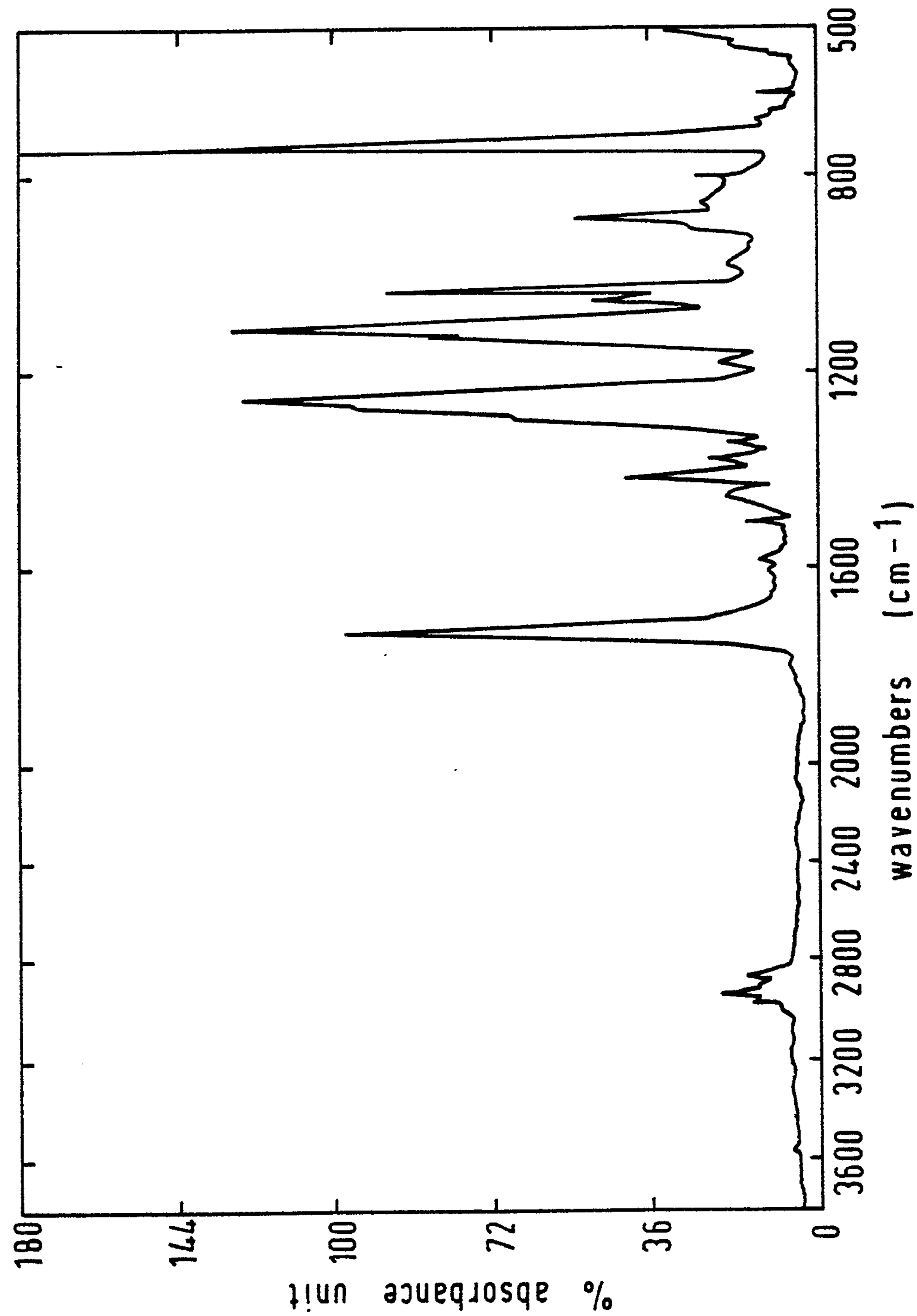
% absorbance unit
180
144
100
72
36
0
3600
3200
2800
2400
2000
1600
1200
800
500
wavenumbers (cm-1)

FIG. 4.

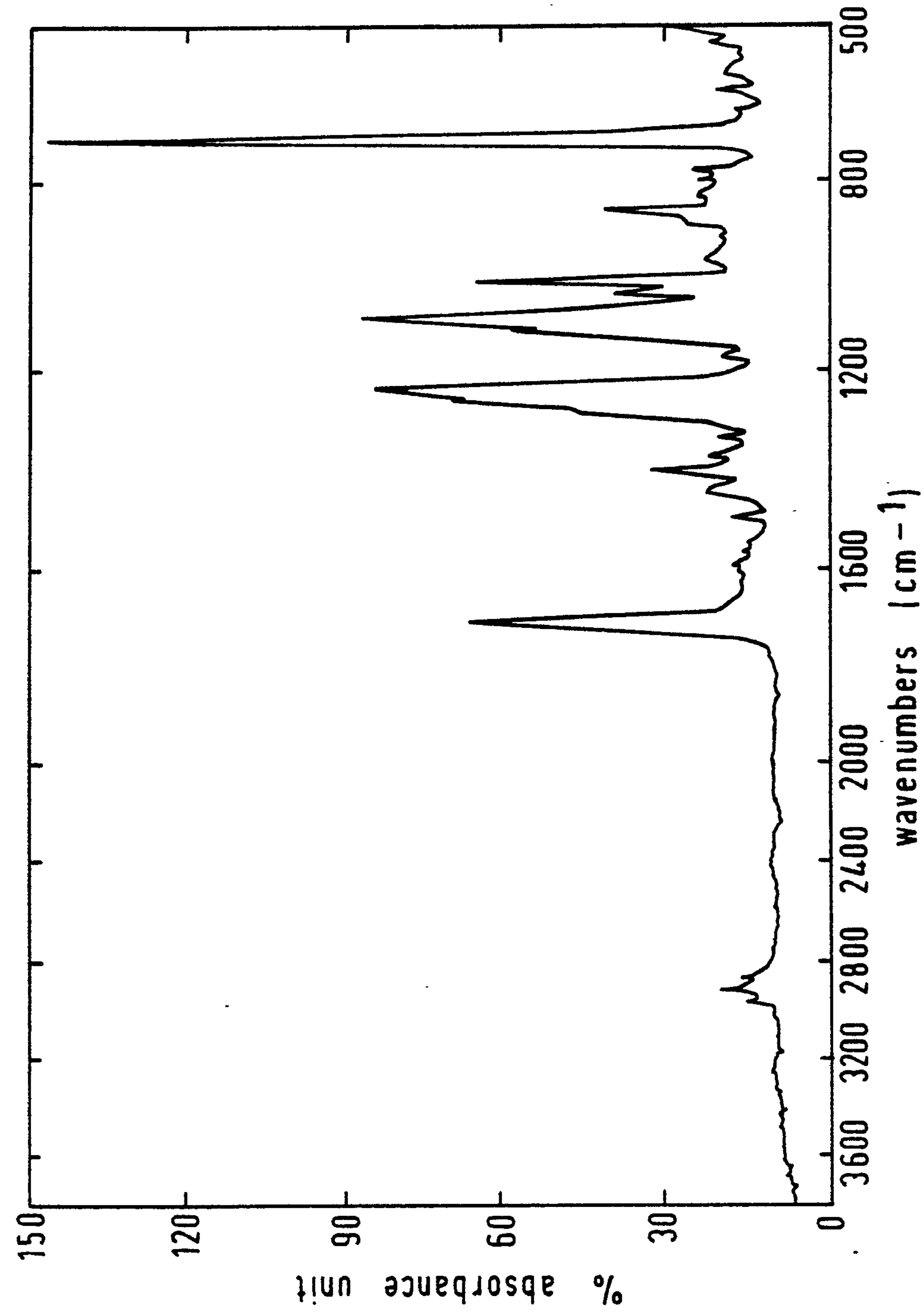
150
120
90
60
30
0
% absorbance unit
3600
3200
2800
2400
2000
1600
1200
800
500
wavenumbers (cm − 1)

FIG. 5.

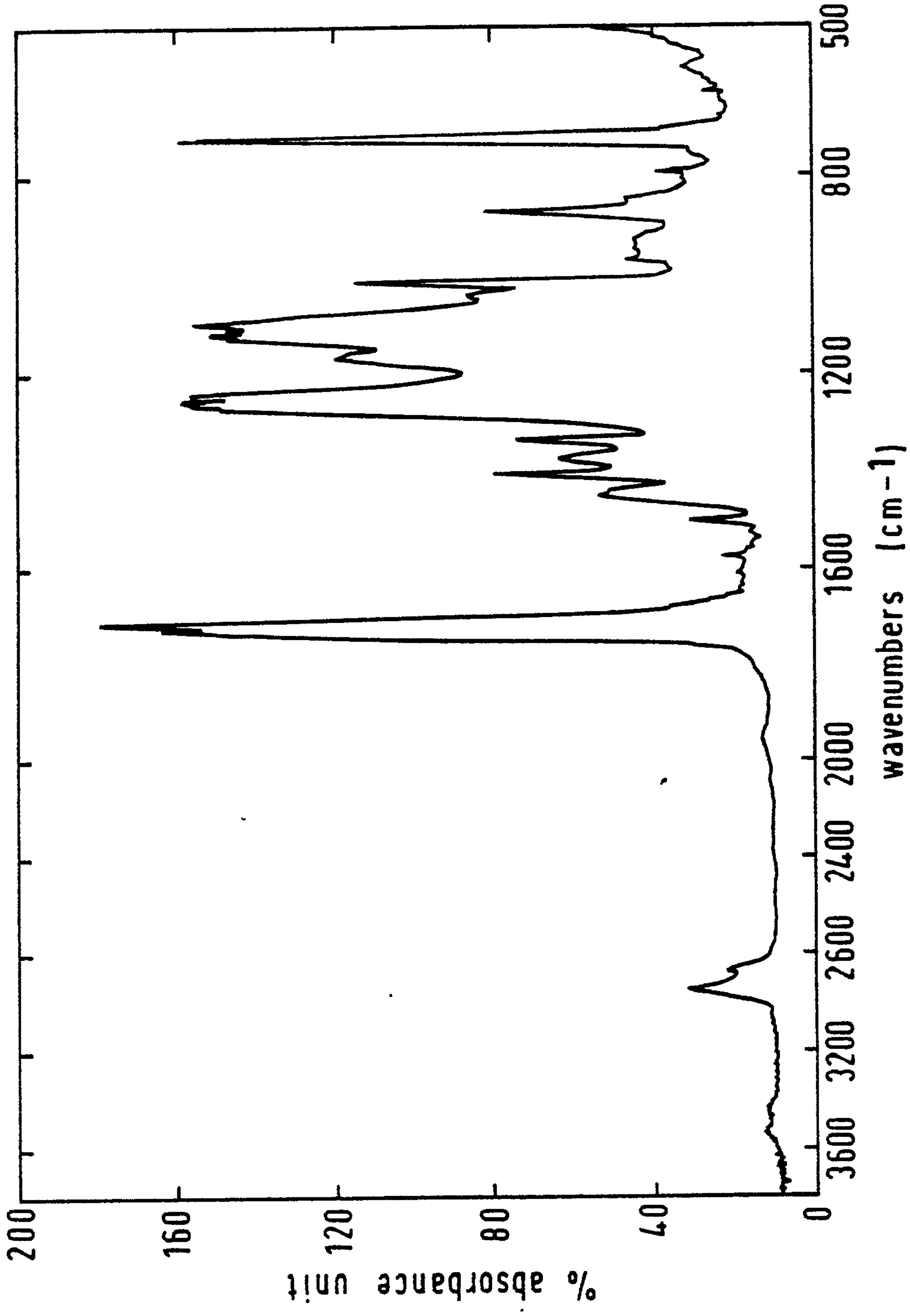
200
160
120
80
40
0
% absorbance unit
3600
3200
2800
2400
2000
1600
1200
800
500
wavenumbers (cm-1)

FIG. 6.

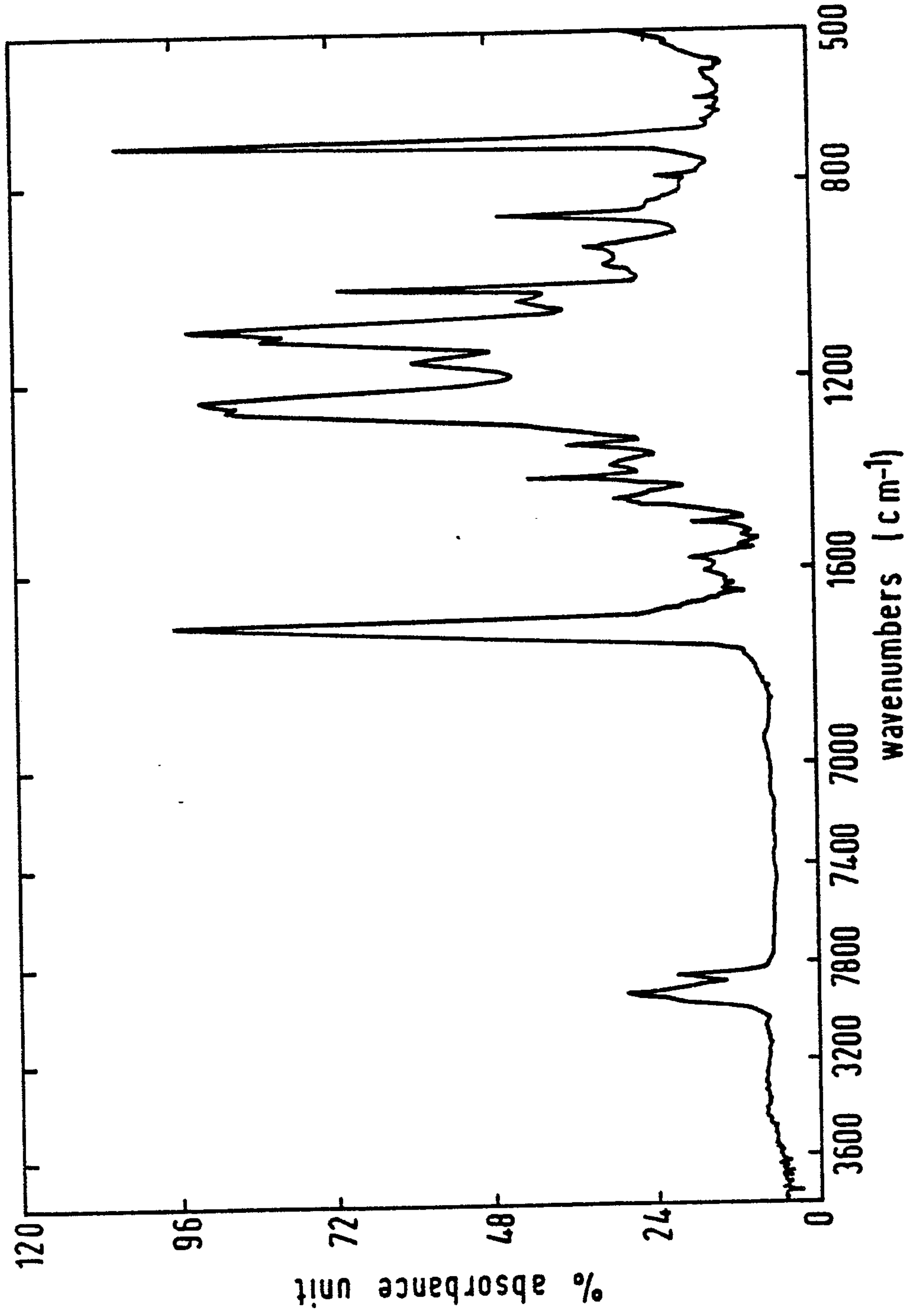
% absorbance unit
120
96
72
48
24
0
wavenumbers (cm-1)
3600
3200
1600
1200
800
500